# EUROPEAN PATENT APPLICATION

(11) **EP 4 155 783 A1**
(43) Date of publication of application: **29.03.2023**
(21) Application number: 21809760.8
(22) Date of filing: 07.05.2021
(51) Int. Cl.: G02B 1/118, C08F 220/28, C08F 290/06, G02B 1/18

(54) **POLYMERIZABLE COMPOSITION**

(30) Priority: 22.05.2020 JP 2020089688
(71) Applicant: Daikin Industries, Ltd., Osaka-shi, Osaka 530-8323 (JP)
(72) Inventor: ATSUMO, Ken, Osaka-shi, Osaka 530-8323 (JP); KUBOTA, Kouji, Osaka-shi, Osaka 530-8323 (JP)
(74) Representative: Hoffmann Eitle
(86) International application number: PCT/JP2021/017574
(87) International publication number: WO 2021/235248

(57) **Abstract**

The present invention is a polymerizable composition comprising: (A) a compound having an alkylene oxide group and a (meth)acrylic group, with an alkylene oxide equivalent of less than 100 and a (meth)acrylic equivalent of less than 200, and having 2 or more identical polymerizable groups; (B) a compound having a molecular weight of 140 or more and 350 or less, having no alkylene oxide group but having a (meth)acrylic group, with a (meth)acrylic equivalent of 137 or less, and having 2 or more carbon-carbon double bonds; (C) a compound having a fluoro(poly)ether group and having 1 or more carbon-carbon double bonds; and (D) a polymerization initiator, wherein a content of (A) is 1.8% by mass to 98% by mass, a content of (B) is 1.8% by mass to 98% by mass, a content of (C) is 0.1% by mass to 10% by mass, and a content of (D) is 0.1% by mass to 10% by mass, based on a total mass of the polymerizable composition.

## Description

### Technical Field

The present disclosure relates to a polymerizable composition.

### Background Art

It is known that a film having a fine uneven structure having a wavelength of visible light or less on a surface thereof is used as an antireflection film. On the surface of such an uneven structure, the refractive index continuously changes from the air layer with respect to incident light, so that reflected light can be drastically reduced. Patent Literatures 1 and 2 disclose a film having such a fine uneven structure on a surface thereof.

### Citation List

### Patent Literature

Patent Literature 1: WO 2018/198768
Patent Literature 2: JP 2019-64056 A

### Summary of Invention

### Technical Problem

The film as described above has excellent antireflection properties due to the uneven structure on the surface thereof. On the other hand, in the film as described above, when dirt such as fingerprints (sebum) adheres to the surface, dirt easily spreads along the uneven structure, and it is difficult to wipe off dirt because dirt enters the recessed portion. Further, there is also a problem that the uneven structure collapses when the dirt adhered to the surface is wiped off, and the antireflection property is impaired. Since a difference in reflectance from a normal portion is large in a portion to which such dirt is adhered or a portion in which the uneven structure is collapsed, the portion can be easily visually recognized even by visual observation.

Accordingly, an object of the present disclosure is to provide a polymerizable composition capable of providing a film excellent in antifouling property (for example, fingerprint wiping property) and mechanical strength (for example, abrasion resistance).

### Solution to Problem

The present disclosure includes the following embodiments.
[1] A polymerizable composition comprising:
   (A) a compound having an alkylene oxide group and a (meth)acrylic group, with an alkylene oxide equivalent of less than 100 and a (meth)acrylic equivalent of less than 200, and having 2 or more identical polymerizable groups;
   (B) a compound having a molecular weight of 140 or more and 350 or less, having no alkylene oxide group but having a (meth)acrylic group, with a (meth)acrylic equivalent of 137 or less, and having 2 or more carbon-carbon double bonds;
   (C) a compound having a fluoro(poly)ether group and having 1 or more carbon-carbon double bonds; and
   (D) a polymerization initiator,
   wherein
   a content of (A) is 1.8% by mass to 98% by mass,
   a content of (B) is 1.8% by mass to 98% by mass,
   a content of (C) is 0.1% by mass to 10% by mass, and
   a content of (D) is 0.1% by mass to 10% by mass, based on a total mass of the polymerizable composition.
[2] The polymerizable composition according to [1], wherein the compound of component (A) is selected from the group consisting of triethylene glycol diacrylate, tetraethylene glycol diacrylate, pentaethylene glycol diacrylate, hexaethylene glycol diacrylate, triethylene glycol dimethacrylate, tetraethylene glycol dimethacrylate, pentaethylene glycol dimethacrylate, tetrapropylene glycol diacrylate, tetrapropylene glycol dimethacrylate, and ethylene oxide 12 mole modified dipentaerythritol hexaacrylate.
[3] The polymerizable composition according to [1] or [2], wherein the compound of component (B) is selected from the group consisting of pentaerythritol diacrylate, pentaerythritol dimethacrylate, pentaerythritol triacrylate, pentaerythritol trimethacrylate, trimethylolpropane diacrylate, trimethylolpropane dimethacrylate, trimethylolpropane triacrylate, trimethylolpropane trimethacrylate, glycerol diacrylate, glycerol dimethacrylate, glycerol triacrylate, glycerol trimethacrylate, 2-hydroxy-3-acryloyl-oxypropyl methacrylate, N,N'-methylenebisacrylamide, N,N'-ethylenebisacrylamide, N,N'-(1,2-dihydroxyethylene)bisacrylamide, N,N',N"-triacryloyldiethylenetriamine, 1,3,5-triacryloylhexahydro-1,3,5-triazine, and 1,3,5-trimethacryloylhexahydro-1,3,5-triazine.
[4] The polymerizable composition according to any one of [1] to [3], wherein the compound of component (C) is a compound represented by any one of the general formulas (A1), (A2), and (A3):

   Rf - R¹ - R² - R³ - (R⁴)ₙ₁ - R⁵ - R⁶ ··· (A1)

   R⁶ - R⁵ - (R⁴)ₙ₁- R³ - R² - R¹ - R² - R³ - (R⁴)ₙ₁ - R⁵ - R⁶ ··· (A2)

   (Rf - R¹ - R²)ₙ₂ - R⁷ - (R⁸ - OC(O)CX¹=CH₂)ₙ₃ ··· (A3)

   wherein Rf represents an alkyl group having 1 to 16 carbon atoms optionally substituted with one or more fluorine atoms;
   R¹ is a fluoro(poly) ether group;
   R² is a group represented by the following formula:

      - (Q)ₕ- (CFZ)ᵢ- (CH₂)ⱼ-
   wherein Q represents an oxygen atom, phenylene, carbazolylene, -NR^{a}- where R^{a} represents a hydrogen atom or an organic group, or a divalent polar group; Z represents a hydrogen atom, a fluorine atom or a lower fluoroalkyl group; h, i, and j are each independently an integer of 0 or more and 50 or less; the sum of h, i, and j is at least 1; and the occurrence order of the respective repeating units enclosed in parentheses is not limited in the formula;
   R³ represents a divalent organic group;
   R⁴, each independently at each occurrence, represents R^{4a} or R^{4b}, provided that at least one R⁴ is R^{4a};
   R^{4a}, each independently at each occurrence, represents a divalent organic group having a curable site;
   R^{4b}, each independently at each occurrence, represents a divalent organic group not having a curable site;
   n1 is an integer of 1 or more and 50 or less;
   R⁵ represents -O-, -S-, -NH- or a single bond;
   R⁶ represents Rf-R¹-R², wherein Rf, R¹, and R² the same meaning as described above, a monovalent organic group, or a hydrogen atom;
   R⁷ represents an organic group having a valence of (n2 + n3) that optionally has a ring structure, a heteroatom and/or a functional group;
   R⁸ represents a divalent organic group;
   X¹ represents a hydrogen atom, a chlorine atom, a fluorine atom, or an alkyl group having 1 to 10 carbon atoms optionally substituted with fluorine;
   n2 is an integer of 1 or more and 3 or less; and
   n3 is an integer of 1 or more and 3 or less.
[5] The polymerizable composition according to any one of [1] to [3], wherein the compound of component (C) is a compound represented by the general formula (1) or (2):

   R^{F1}_{α} - X^{A} - R^{D} _{β} (1)

   R^{D}_{γ}- X^{A} -R^{F2} - X^{A} -R^{D}_{γ} (2)

   wherein
   R^{F1} is each independently at each occurrence Rf¹-R^{F}-O_{q};
   R^{F2} is -Rf²ₚ-R^{F}-O_{q}-;
   Rf¹ is each independently at each occurrence a C₁₋₁₆ alkyl group optionally substituted with one or more fluorine atoms;
   Rf² is a C₁₋₆ alkylene group optionally substituted with one or more fluorine atoms;
   R^{F} is each independently at each occurrence a divalent fluoropolyether group;
   p is 0 or 1;
   q is each independently at each occurrence 0 or 1;
   X^{A} is each independently a single bond or a di- to decavalent organic group;
   R^{D} is each independently at each occurrence a group containing a carbon-carbon double bond;
   α is an integer of 1 to 9;
   β is an integer of 1 to 9; and
   γ is each independently an integer of 1 to 9.
[6] A laminate comprising:
   a support; and
   a polymer layer having, on a surface thereof, an uneven structure in which a plurality of protruding portions are provided at a pitch equal to or less than a wavelength of visible light,
   wherein the polymer layer is a cured product of the polymerizable composition according to [1].
[7] The laminate according to [6], wherein the polymer layer has a thickness of 1 µm or more and 20 µm or less.
[8] The laminate according to [6] or [7], wherein the pitch of the plurality of protruding portions on the surface of the polymer layer is 20 nm or more and 400 nm or less.
[9] The laminate according to any one of [6] to [8], wherein a height of the plurality of protruding portions on the surface of the polymer layer is 50 nm or more and 500 nm or less.
[10] The laminate according to any one of [6] to [9], wherein an aspect ratio of the plurality of protruding portions on the surface of the polymer layer is 0.13 or more and 25 or less.
[11] An antireflection film comprising the laminate according to any one of [6] to [10].
[12] A method for producing the laminate according to any one of [6] to [11], comprising:
   (1) applying the polymerizable composition according to any one of [1] to [4] onto a surface of a support to form a polymerizable composition layer;
   (2) pressing the polymerizable composition layer against a metal mold to form an uneven structure on the surface of the polymerizable composition layer;
   (3) curing the polymerizable composition layer having the uneven structure on the surface to form a polymer layer; and
   (4) releasing the metal mold from the polymer layer.

### Advantageous Effect of Invention

According to the present disclosure, a polymerizable composition capable of providing a film having excellent antifouling properties and mechanical strength is provided.

### Brief Description of Drawings

[FIG. 1] FIG. 1 is a cross-sectional view of a laminate according to an embodiment of the present disclosure.
[FIG. 2] FIG. 2 is a cross-sectional view of the laminate according to another embodiment of the present disclosure.
[FIG. 3] FIG. 3 is a view illustrating Step 1 in a method for producing the laminate of the present disclosure.
[FIG. 4] FIG. 4 is a diagram illustrating Step 2 in the method for producing the laminate of the present disclosure.
[FIG. 5] FIG. 5 is a diagram illustrating Step 4 in the method for producing the laminate of the present disclosure.

### Description of Embodiments

### (Polymerizable composition)

A polymerizable composition of the present disclosure contains the following components (A) to (D):
(A) a compound having an alkylene oxide group and a (meth)acrylic group, with an alkylene oxide equivalent of less than 100 and a (meth)acrylic equivalent of less than 200, and having 2 or more identical polymerizable groups;
(B) a compound having a molecular weight of 140 to 350, having no alkylene oxide group but having a (meth)acrylic group, with a (meth)acrylic equivalent of 137 or less, and having 2 or more carbon-carbon double bonds;
(C) a compound having a fluoro(poly)ether group and having 1 or more carbon-carbon double bonds; and
(D) a polymerization initiator, and
   a content of the component (A) is 1.8% by mass to 98% by mass,
   a content of the component (B) is 1.8% by mass to 98% by mass,
   a content of the component (C) is 0.1% by mass to 10% by mass, and
   a content of the component (D) is 0.1% by mass to 10% by mass, based on a total mass of the polymerizable composition.

### (Component (A))

The component (A) is a compound having an alkylene oxide group and a (meth)acrylic group, with an alkylene oxide equivalent of less than 100 and a (meth)acrylic equivalent of less than 200, and having 2 or more identical polymerizable groups (hereinafter also referred to as "compound (A)").

The compound (A) may be a so-called active energy ray-curable monomer. The compound (A) can impart appropriate flexibility to a cured product by having an alkylene oxide group, and can impart appropriate hardness to a cured product by having two or more identical polymerizable groups, thereby forming a polymer layer excellent in abrasion resistance.

The alkyleneoxide group is a group represented by - (CₙH₂ₙ)O-. In the formula, n is preferably an integer of 1 to 10, more preferably an integer of 1 to 4, and still more preferably an integer of 2 or 3. In a case where a compound contains a plurality of alkylene oxide groups, the alkylene oxide groups may be the same or different.

The alkylene oxide equivalent is the mass of the compound per mole of alkylene oxide groups, and is obtained by dividing the molecular weight of the compound by the number of alkylene oxide groups in the compound molecule.

In the compound (A), the alkylene oxide equivalent may be less than 100, preferably 60 to 98, more preferably 70 to 97, and still more preferably 75 to 96. When the compound (A) has an alkylene oxide equivalent within the above range, appropriate flexibility can be imparted to the cured product.

The (meth)acrylic group includes an acrylic group and a methacrylic group, and is represented by CH₂=CHR-CO-. In the formula, R is a hydrogen atom or a methyl group.

The acrylic equivalent is the mass of the compound per mole of (meth)acrylic groups, and is obtained by dividing the molecular weight of the compound by the number of (meth)acrylic groups in the compound molecule.

In the compound (A), the (meth)acrylic equivalent may be less than 200, preferably 100 to 195, more preferably 125 to 190, and still more preferably 128 to 186. When the compound (A) has a (meth)acrylic equivalent within the above range, appropriate flexibility can be imparted to the cured product.

The polymerizable group is a group capable of participating in a polymerization reaction by an active radical or the like generated from a polymerization initiator. Examples of the polymerizable group include a group having a carbon-carbon double bond, such as a (meth)acrylic group, a vinyl group, a vinyloxy group, an isopropenyl group, an oxiranyl group, and an oxetanyl group. In a preferred embodiment, the polymerizable group may be a (meth)acrylic group.

The compound (A) has the polymerizable group. The polymerizable groups may be one or two or more. The compound (A) has at least two identical polymerizable groups in the molecule. In one embodiment, the compound (A) has 2 to 10, preferably 2 to 6 identical polymerizable groups in the molecule.

The molecular weight of the compound (A) is not limited, but may be preferably 200 to 2,500, and more preferably 250 to 1,500.

In a preferred embodiment, the compound (A) may be a compound represented by the following formula:

CH₂=CHR¹¹-CO-O(CₙH₂ₙO)ₘ-CO-CHR¹¹=CH₂

CR¹²ₓR¹³₄₋ₓ

O{-CₐH₂ₐ-CR¹²_{y}R¹³_{3-y}}₂

wherein
R¹¹ is each independently a hydrogen atom or a C₁₋₃ alkyl group;
R¹² is each independently - (CₙH₂ₙO)ₘ-CO-CHR¹¹=CH₂;
R¹³ is each independently a hydrogen atom or -C_{b}H_{2b}-R¹⁴;
R¹⁴ is each independently a hydrogen atom or a hydroxyl group;
m is each independently an integer of 1 to 6;
n is each independently an integer of 1 to 6 for each (CₙH₂ₙO) unit;
a is an integer of 1 to 6;
b is an integer of 1 to 6;
x is an integer of 2 to 4;
y is an integer of 1 to 3;
the compound (A) has an alkylene oxide equivalent weight of less than 100;
the compound (A) has a (meth)acrylic equivalent of less than 200; and
the compound (A) has two or more identical polymerizable groups.

In a preferred embodiment, in the formula:
R¹¹ is each independently a hydrogen atom or a methyl group;
R¹² is each independently - (CₙH₂ₙO)ₘ-CO-CHR¹¹=CH₂;
R¹³ is each independently a hydrogen atom or - (C_{b}H_{2b}) - R¹⁴;
R¹⁴ is each independently a hydrogen atom or a hydroxyl group;
m is each independently an integer of 1 to 6;
n is each independently an integer of 1 to 3, more preferably an integer of 1 or 2 for each (CₙH₂ₙO) unit;
a is an integer of 1 to 3, more preferably an integer of 1 to 2;
b is an integer of 1 to 6, more preferably an integer of 1 to 2;
x is an integer of 3 to 4; and
y is an integer of 2 to 3.

Examples of the compound (A) include, but are not limited to, triethylene glycol diacrylate, tetraethylene glycol diacrylate, pentaethylene glycol diacrylate, hexaethylene glycol diacrylate, triethylene glycol dimethacrylate, tetraethylene glycol dimethacrylate, pentaethylene glycol dimethacrylate, tetrapropylene glycol diacrylate, tetrapropylene glycol dimethacrylate, and ethylene oxide 12 mole modified dipentaerythritol hexaacrylate.

The compound (A) is available as, for example, BLEMMER (R) ADE-200 (NOF Corporation), BLEMMER (R) PDE-150 (NOF Corporation), BLEMMER (R) PDE-200 (NOF Corporation), A-200 (Shin-Nakamura Chemical Industry Co., Ltd.), FANCRYL (R) FA-220M (SHOWA DENKO MATERIALS CO., LTD.), LIGHT ACRYLATE (R) 3EG-A (KYOEISHA CHEMICAL Co., LTD.), LIGHT ACRYLATE (R) 4EG-A (KYOEISHA CHEMICAL Co., LTD.), LIGHT ESTER (R) 3EG (KYOEISHA CHEMICAL Co., LTD.), LIGHT ESTER (R) 4EG (KYOEISHA CHEMICAL Co., LTD.), KAYARAD DPEA-12 (Nippon Kayaku Co., Ltd.), and ARONIX (R) M-240 (Toagosei Co., Ltd.).

The component (A) may be used alone or as a mixture of two or more compounds as the above component (A).

The content of component (A) based on the total mass of the polymerizable composition may be 1.8% by mass to 98% by mass, preferably 10% by mass to 95% by mass. When the content of component (A) is within the above range, the abrasion resistance is improved. Here, the "total mass of the polymerizable composition" refers to the total mass of nonvolatile components excluding the solvent, and is typically the total mass of the components (A) to (D) and other components described below.

### (Component (B))

The component (B) is a compound having a molecular weight of 140 to 350, having no alkylene oxide group but having a (meth)acrylic group, with a (meth)acrylic equivalent of 137 or less, and having 2 or more carbon-carbon double bonds (hereinafter also referred to as "compound (B)").

The compound (B) may be a so-called active energy ray-curable monomer. The compound (B) can improve the adhesion between the polymer layer and the support, and can impart appropriate hardness to a cured product by having two or more carbon-carbon double bonds, thereby forming a polymer layer excellent in abrasion resistance.

The compound (B) has no alkylene oxide group. When the compound (B) has no alkylene oxide group, an appropriate hardness can be imparted to the cured product.

The (meth)acrylic group in the compound (B) has the same meaning as the (meth)acrylic group described for the compound (A). The (meth)acrylic group in the compound (A) and the (meth)acrylic group in the compound (B) may be the same or different.

In the compound (B), the (meth)acrylic equivalent may be 137 or less, preferably 50 to 120, more preferably 70 to 105, and still more preferably 76 to 101. When the compound (B) has a (meth)acrylic equivalent within the above range, appropriate flexibility can be imparted to the cured product.

The compound (B) has two or more carbon-carbon double bonds, preferably 2 to 10 carbon-carbon double bonds, more preferably 2 to 6 carbon-carbon double bonds, and still more preferably 2 to 3 carbon-carbon double bonds. The carbon-carbon double bond may be included as the polymerizable group. Such polymerizable groups may be one or two or more.

The molecular weight of the compound (B) may be 140 to 350, preferably 145 to 330, more preferably 150 to 300, and still more preferably 153 to 299.

In a preferred embodiment, the compound (B) may be a compound represented by the following formula:

CH₂=CHR¹¹-CO-O(CₙH₂ₙO)ₘ-CO-CHR¹¹=CH₂

CR¹²ₓR¹³₄₋ₓ

O{-CₐH₂ₐ-CR¹²_{y}R¹³_{3-y}}₂

CH₂=CHR¹¹-CO-NH-(C_{c}H_{2c})-NH-CO-CHR¹¹=CH₂

R¹⁵-NH-(C_{d}H_{2d})-NR¹⁵-(C_{d}H_{2d})-NH-R¹⁵

(trivalent triazine ring) R²⁰_{z}R²¹_{3-z}
wherein
R¹¹ is each independently a hydrogen atom or a C₁₋₃ alkyl group;
R¹² is each independently - (CₙH₂ₙO)ₘ-CO-CHR¹¹=CH₂;
R¹³ is each independently a hydrogen atom or -C_{b}H_{2b}-R¹⁴;
R¹⁴ is each independently a hydrogen atom or a hydroxyl group;
R¹⁵ is a hydrogen atom or -CO-CHR¹¹=CH₂;
R²⁰ is -CO-CHR¹¹=CH₂;
R²¹ is a hydrogen atom;
m is each independently an integer of 1 to 6;
n is each independently an integer of 1 to 6 for each (CₙH₂ₙO) unit;
a is an integer of 1 to 6;
b is an integer of 1 to 6;
c is an integer of 1 to 6;
d is each independently an integer of 1 to 6;
x is an integer of 2 to 4;
y is an integer of 1 to 3;
z is an integer of 2 to 3;
the compound (B) has a molecular weight of 140 or more and 350 or less;
the compound (B) has no alkylene oxide group;
the compound (B) has a (meth)acrylic equivalent of 137 or less; and
the compound (B) has two or more identical polymerizable groups.

In a preferred embodiment, in the formula:
R¹¹ is each independently a hydrogen atom or a methyl group;
R¹² is each independently - (CₙH₂ₙO)ₘ-CO-CHR¹¹=CH₂;
R¹³ is each independently a hydrogen atom or - (C_{b}H_{2b})-R¹⁴;
R¹⁴ is each independently a hydrogen atom or a hydroxyl group;
R¹⁵ is a hydrogen atom or -CO-CHR¹¹=CH₂;
R²⁰ is -CO-CHR¹¹=CH₂;
R²¹ is a hydrogen atom;
m is each independently an integer of 1 to 6;
n is each independently an integer of 1 to 3, more preferably an integer of 1 or 2 for each (CₙH₂ₙO) unit;
a is an integer of 1 to 3, more preferably an integer of 1 to 2;
b is an integer of 1 to 6, more preferably an integer of 1 to 2;
c is an integer of 1 to 6, more preferably an integer of 1 to 3;
d is an integer of 1 to 6, more preferably an integer of 1 to 3;
x is an integer of 3 to 4;
y is an integer of 2 to 3; and
z is an integer of 2 to 3.

Examples of the compound (B) include, but are not limited to, pentaerythritol diacrylate, pentaerythritol dimethacrylate, pentaerythritol triacrylate, pentaerythritol trimethacrylate, trimethylolpropane diacrylate, trimethylolpropane dimethacrylate, trimethylolpropane triacrylate, trimethylolpropane trimethacrylate, glycerol diacrylate, glycerol dimethacrylate, glycerol triacrylate, glycerol trimethacrylate, 2-hydroxy-3-acryloyl-oxypropyl methacrylate, N,N'-methylenebisacrylamide, N,N'-ethylenebisacrylamide, N,N'-(1,2-dihydroxyethylene)bisacrylamide, N,N',N"-triacryloyldiethylenetriamine, 1,3,5-triacryloylhexahydro-1,3,5-triazine, and 1,3,5-trimethacryloylhexahydro-1,3,5-triazine.

The compound (B) is available as, for example, BLEMMER GMR-M (NOF Corporation), BLEMMER GMR-R (NOF Corporation), BLEMMER GAM (NOF Corporation), BLEMMER GAM-R (NOF Corporation), A-TMM-3 (Shin-Nakamura Chemical Industry Co., Ltd.), A-TMM-3L (Shin-Nakamura Chemical Industry Co., Ltd.), A-TMN-3LM-N (Shin-Nakamura Chemical Industry Co., Ltd.), A-TMPT (Shin-Nakamura Chemical Industry Co., Ltd.), TMPT (Shin-Nakamura Chemical Industry Co., Ltd.), 701A (Shin-Nakamura Chemical Industry Co., Ltd.), 701 (Shin-Nakamura Chemical Industry Co., Ltd.), LIGHT ACRYLATE PE-3A (KYOEISHA CHEMICAL Co., LTD.), LIGHT ACRYLATE TMP-A (KYOEISHA CHEMICAL Co., LTD.), LIGHT ACRYLATE TMP (KYOEISHA CHEMICAL Co., LTD.), LIGHT ESTER G-201P (KYOEISHA CHEMICAL Co., LTD.), LIGHT ESTER G-101P (KYOEISHA CHEMICAL Co., LTD.), FAM-301 (FUJIFILM Corporation), ARONIX M-309 (Toagosei Co., Ltd.), ARONIX M-305 (Toagosei Co., Ltd.), ARONIX M-306 (Toagosei Co., Ltd.), ARONIX M-920 (Toagosei Co., Ltd.), and ARONIX M-930 (Toagosei Co., Ltd.).

The component (B) may be used alone or as a mixture of two or more compounds as the component (B).

The content of component (B) based on the total mass of the polymerizable composition may be 1.8% by mass to 98% by mass or less, preferably 10% by mass to 95% by mass. When the content of component (B) is 1.8% by mass or more, the adhesion of the polymer layer to the substrate is improved, and when the content is 98% by mass or less, the abrasion resistance is improved.

### (Component (C))

The component (C) is a compound having a fluoro(poly)ether group and having 1 or more carbon-carbon double bonds (hereinafter also referred to as "compound (C) ") .

The compound (C) may be a so-called active energy ray-curable monomer. The compound (C) imparts functions such as fingerprint wiping properties, water-repellency, oil-repellency, liquid repellency, and antifouling properties to the polymer layer.

The fluoro(poly)ether group is preferably a group represented by the following formula:

- (OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

wherein R^{Fa} is each independently at each occurrence a hydrogen atom, a fluorine atom, or a chlorine atom; and
a, b, c, d, e and f are each independently an integer of 0 to 200, the sum of a, b, c, d, e and f is 1 or more, and the occurrence order of the respective repeating units enclosed in parentheses provided with a, b, c, d, e or f is not limited in the formula.

In a preferred embodiment, the fluoro(poly)ether group is a perfluoro(poly) ether group. That is, R^{Fa} is a fluorine atom.

Preferably, a, b, c, d, e, and f are each independently an integer of 0 to 100.

The sum of a, b, c, d, e, and f is preferably 5 or more, and more preferably 10 or more, and may be, for example, 15 or more or 20 or more. The sum of a, b, c, d, e, and f is preferably 200 or less, more preferably 100 or less, and still more preferably 60 or less, and may be, for example, 50 or less or 30 or less.

These repeating units may be linear or branched. The repeating unit may be, for example, -(OC₆F₁₂)- may be - (OCF₂CF₂CF₂CF₂CF₂CF₂) -, - (OCF(CF₃)CF₂CF₂CF₂CF₂) -, - (OCF₂CF(CF₃)CF₂CF₂CF₂) -, - (OCF₂CF₂CF(CF₃)CF₂CF₂) -, - (OCF₂CF₂CF₂CF(CF₃)CF₂) -, - (OCF₂CF₂CF₂CF₂CF(CF₃))-, or the like. - (OC₅F₁₀)- may be - (OCF₂CF₂CF₂CF₂CF₂) -, - (OCF(CF₃)CF₂CF₂CF₂) -, - (OCF₂CF(CF₃)CF₂CF₂) -, - (OCF₂CF₂CF(CF₃)CF₂)-, -(OCF₂CF₂CF₂CF(CF₃))-, or the like. - (OC₄F₈)- may be any of -(OCF₂CF₂CF₂CF₂)-, - (OCF(CF₃)CF₂CF₂) -, - (OCF₂CF(CF₃)CF₂) -, - (OCF₂CF₂CF(CF₃)) -, - (OC(CF₃)₂CF₂) -, - (OCF₂C(CF₃)₂)-, -(OCF(CF₃)CF(CF₃))-, -(OCF(C₂F₅)CF₂)-, and - (OCF₂CF(C₂F₅)) -. - (OC₃F₆) - (that is, in the formula, R^{Fa} is a fluorine atom) may be any of -(OCF₂CF₂CF₂)-, - (OCF(CF₃)CF₂)-, and - (OCF₂CF(CF₃)) -. -(OC₂F₄)- may be any of -(OCF₂CF₂)- and -(OCF(CF₃)) -.

In one embodiment, the repeating unit is linear. When the repeating unit is linear, the surface lubricity, friction durability, and the like of the surface-treating layer can be improved.

In one embodiment, the repeating unit is branched. When the repeating unit is branched, the dynamic friction coefficient of the surface-treating layer can be increased.

In one embodiment, the fluoro(poly)ether group is each independently a group represented by any one of the following formulas (f1) to (f5):

- (OC₃F₆)_{d}-(OC₂F₄)ₑ- (f1)

where d is an integer of 1 to 200 and e is 0 or 1;

- (OC₄F₈)_{c}- (OC₃F₆) _{d}- (OC₂F₄)ₑ- (OCF₂)_{f}- (f2)

wherein c and d are each independently an integer of 0 or more and 30 or less, and e and f are each independently an integer of 1 or more and 200 or less;
the sum of c, d, e, and f is 2 or more; and
the occurrence order of the respective repeating units enclosed in parentheses provided with a subscript c, d, e, or f is not limited in the formula;

   -(R⁶-R⁷)_{g}- (f3)

   wherein R⁶ represents OCF₂ or OC₂F₄;
R⁷ is a group selected from OC₂F₄, OC₃F₆, OC₄F₈, OC₅F₁₀, and OC₆F₁₂, or alternatively a combination of two or three groups independently selected from these groups; and
g is an integer of 2 to 100;

   - (OC₆F₁₂)ₐ-(OC₅F₁₀)_{b}-(OC₄F₈)_{c}-(OC₃F₆) _{d}-(OC₂F₄)ₑ-(OCF₂)_{f}- (f4)

   wherein e is an integer of 1 or more and 200 or less, a, b, c, d, and f are each independently an integer of 0 or more and 200 or less, the sum of a, b, c, d, e, and f is at least 1, and the occurrence order of the respective repeating units enclosed in parentheses provided with a, b, c, d, e or f is not limited in the formula; and

   - (OC₆F₁₂)ₐ-(OC₅F₁₀)_{b}-(OC₄F₈)_{c}-(OC₃F₆)_{d}-(OC₂F₄)ₑ-(OCF₂)_{f}- (f5)

   wherein f is an integer of 1 or more and 200 or less, a, b, c, d, and e are each independently an integer of 0 or more and 200 or less, the sum of a, b, c, d, e, and f is at least 1, and the occurrence order of the respective repeating units enclosed in parentheses provided with a, b, c, d, e, or f is not limited in the formula.

In the formula (f1), d is preferably 5 to 200, more preferably 10 to 100, and still more preferably 15 to 50, and is, for example, an integer of 25 to 35. In one embodiment, e is 0. In another embodiment, e is 1. The formula (f1) is preferably a group represented by - (OCF₂CF₂CF₂)_{d}- or - (OCF(CF₃)CF₂)_{d}-, and more preferably a group represented by - (OCF₂CF₂CF₂)_{d}-.

In the formula (f2), e and f are each independently an integer of preferably 5 or more and 200 or less, and more preferably 10 to 200. The sum of c, d, e, and f is preferably 5 or more, and more preferably 10 or more, and may be, for example, 15 or more or 20 or more. In one embodiment, the formula (f2) is preferably a group represented by - (OCF₂CF₂CF₂CF₂)_{c}-(OCF₂CF₂CF₂)_{d}-(OCF2CF₂)ₑ-(OCF₂)_{f}-. In another embodiment, the formula (f2) may be a group represented by - (OC₂F₄)ₑ-(OCF₂)_{f}-.

In the formula (f3), R⁶ is preferably OC₂F₄. In the formula (f3), R⁷ is preferably a group selected from OC₂F₄, OC₃F₆, and OC₄F₈, or a combination of two or three groups independently selected from these groups, and more preferably a group selected from OC₃F₆ and OC₄F₈. Examples of the combination of two or three groups independently selected from OC₂F₄, OC₃F₆ and OC₄F₈ are not limited, but include -OC₂F₄OC₃F₆-, -OC₂F₄OC₄F₈-, -OC₃F₆OC₂F₄-, -OC₃F₆OC₃F₆-, -OC₃F₆OC₄F₈-, -OC₄F₈OC₄F₈-, -OC₄F₈OC₃F₆-, -OC₄F₈OC₂F₄-, - OC₂F₄OC₂F₄OC₃F₆-, -OC₂F₄OC₂F₄OC₄F₈-, -OC₂F₄OC₃F₆OC₂F₄-, - OC₂F₄OC₃F₆OC₃F₆-, -O₂CF₄OC₄F₈OC₂F₄-, -OC₃F₆OC₂F₄OC₂F₄-, - OC₃F₆OC₂F₄OC₃F₆-, -OC₃F₆OC₃F₆OC₂F₄-, and -OC₄F₈OC₂F₄OC₂F₄-. In the formula (f3), g is an integer of preferably 3 or more, and more preferably 5 or more. g is preferably an integer of 50 or less. In the formula (f3), OC₂F₄, OC₃F₆, OC₄F₈, OC₅F₁₀, and OC₆F₁₂ may be either linear or branched, and are preferably linear. In this embodiment, the formula (f3) is preferably - (OC₂F₄-OC₃F₆)_{g}- or - (OC₂F₄-OC₄F₈)_{g}-.

In the formula (f4), e is an integer of preferably 1 or more and 100 or less, and more preferably 5 or more and 100 or less. The sum of a, b, c, d, e, and f is preferably 5 or more, and more preferably 10 or more, and is, for example, 10 or more and 100 or less.

In the formula (f5), f is an integer of preferably 1 or more and 100 or less, and more preferably 5 or more and 100 or less. The sum of a, b, c, d, e, and f is preferably 5 or more, and more preferably 10 or more, and is, for example, 10 or more and 100 or less.

In one embodiment, the fluoro(poly)ether group is a group represented by the formula (f1).

In one embodiment, the fluoro(poly)ether group is a group represented by the formula (f2).

In one embodiment, the fluoro(poly)ether group is a group represented by the formula (f3).

In one embodiment, the fluoro(poly)ether group is a group represented by the formula (f4).

In one embodiment, the fluoro(poly)ether group is a group represented by the formula (f5).

In the fluoro(poly)ether group, the ratio of e to f (hereinafter, referred to as an "e/f ratio") is 0.1 to 10, preferably 0.2 to 5, more preferably 0.2 to 2, still more preferably 0.2 to 1.5, and further preferably 0.2 to 0.85. With an e/f ratio of 10 or less, the lubricity, friction durability, and chemical resistance (such as durability against artificial sweat) of a surface-treating layer obtained from the compound are further increased. The smaller the e/f ratio is, the higher the lubricity and the friction durability of the surface-treating layer are. On the other hand, with an e/f ratio of 0.1 or more, the stability of the compound can be further increased. The larger the e/f ratio is, the more improved the stability of the compound is.

In one embodiment, the e/f ratio is preferably 0.2 to 0.95, and more preferably 0.2 to 0.9.

In one embodiment, from the viewpoint of heat resistance, the e/f ratio is preferably 1.0 or more, and more preferably 1.0 to 2.0.

In one embodiment, the compound (C) may be a compound obtained by reacting a (a1) compound having an isocyanate group (-NCO group) with a (b1) compound having active hydrogen.

### [(a1) Compound having isocyanate group (-NCO Group)]

Examples of the compound having an isocyanate group which is the compound (a1) include polyisocyanate. Herein, the polyisocyanate means a compound having two or more isocyanate groups in the molecule. The compound (a1) may be a polyisocyanate obtained by trimerizing a diisocyanate. Such a polyisocyanate obtained by trimerizing a diisocyanate may be a triisocyanate. The polyisocyanate that is a trimer of a diisocyanate may be present as a polymer in which polyisocyanates are polymerized.

Examples of the diisocyanate include, but are not limited to, diisocyanates in which an isocyanate group is bonded to an aliphatic group, such as trimethylene diisocyanate, hexamethylene diisocyanate, isophorone diisocyanate, xylylene diisocyanate, hydrogenated xylylene diisocyanate, cyclohexane diisocyanate, dicyclohexylmethane diisocyanate, and norbornane diisocyanate; and diisocyanates in which an isocyanate group is bonded to an aromatic group, such as tolylene diisocyanate, diphenylmethane diisocyanate, polymethylene polyphenyl polyisocyanate, tolidine diisocyanate, and naphthalene diisocyanate.

In a preferred embodiment, the compound (a1) is an isocyanurate-type polyisocyanate. The isocyanurate-type polyisocyanate may be present as a polymer in which polyisocyanates are polymerized. The isocyanurate-type polyisocyanate may be a monocyclic compound having only one isocyanurate ring, a polycyclic compound obtained by polymerizing the monocyclic compound, or a mixture thereof. Such an isocyanurate-type polyisocyanate is commercially available as, for example, SUMIDUR (R) N3300 (manufactured by Sumitomo Bayer Urethane Co., Ltd.).

Specific examples of polyisocyanates include, but are not limited to, compounds having the following structure:

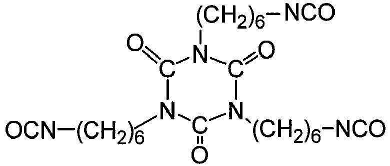

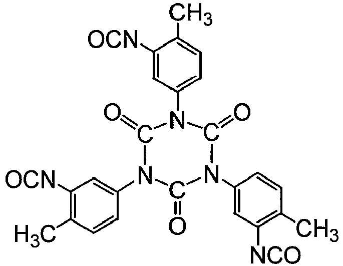

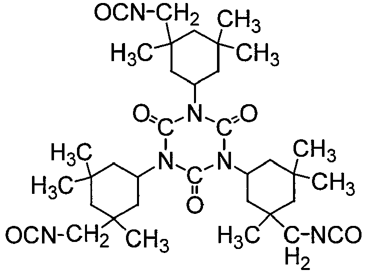

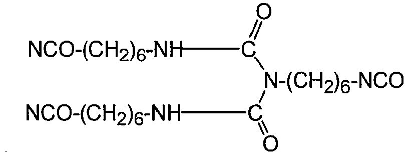

These polyisocyanates may be present as polymers. For example, when the polyisocyanate is an isocyanurate-type polyisocyanate of hexamethylene diisocyanate, the polyisocyanate may have a polymer having the following structure:

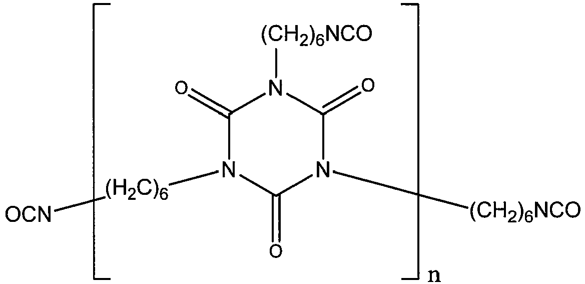

### [(b1) Compound having active hydrogen]

The composition (b1) preferably contains the following two components:
(b1-1) a compound having active hydrogen and a perfluoropolyether group;
(b1-2) a monomer containing active hydrogen and a carbon-carbon double bond.

More preferably, the composition (b1) further contains (b3) another compound having active hydrogen.

The term "active hydrogen" as used herein means a hydrogen atom that can be donated to an isocyanate group as a proton. Examples of the group containing active hydrogen include an -OH group, a -C(=O)H group, an -SH group, an - SO₃H group, an -SOzH group, an -SOH group, an -NH₂ group, an -NH- group, and an -SiH group. For example, when active hydrogen contained in the composition (b1) is an -OH group, a urethane bond is formed from a reaction between the compound (a1) and the compound (b1).

In the composition (b1) and the composition (a1), the number of moles of active hydrogen in the composition (b1) is preferably equal to the number of moles of the isocyanate group in the composition (a1). For example, when there is only one functional group having active hydrogen in composition (b1), the number of moles of the compound (b1) is preferably equal to the number of moles of the isocyanate group in the compound (a1).

### [(b1-1) Compound having active hydrogen and perfluoropolyether group]

The compound (b1-1) is a compound containing active hydrogen and a perfluoropolyether group, and may be, for example, a compound having a group containing one active hydrogen at one molecular end, such as a hydroxyl group, in addition to having a perfluoropolyether group, or a compound having a group having one hydroxyl group at each of the two molecular ends. A description of the perfluoropolyether group is omitted as it is provided above.

The number average molecular weight of the compound (b1-1) is not limited and is 500 to 12,000, preferably 1,000 to 10,000, and more preferably 1,500 to 8,000. In the present invention, the "average molecular weight" refers to a number average molecular weight, and the "average molecular weight" is a value obtained by ¹⁹F-NMR measurement.

Preferably, the compound (b1-1) may be at least one compound represented by either of the following general formulas (b1-1-i) and (b1-1-ii):

Rf¹-PFPE-R¹-CH₂OH (b1-1-i)

HOCH₂-R¹-PFPE-R¹-CH₂OH (b1-1-ii)

wherein PFPE is as described above.

In the formulas (b1-1-i) and (b1-1-ii), Rf¹ represents an (for example, linear or branched) alkyl group having 1 to 16 carbon atoms optionally substituted with one or more fluorine atoms, and preferably a linear or branched alkyl groups having 1 to 3 carbon atoms optionally substituted with one or more fluorine atoms. Preferably, Rf¹ is linear. Preferably, the alkyl group optionally substituted with one or more fluorine atoms is a fluoroalkyl group wherein the terminal carbon atom is CF₂H- and all other carbon atoms are fully substituted with fluorine or a perfluoroalkyl group, more preferably a perfluoroalkyl group, and specifically -CF₃, -CF₂CF₃, or -CF₂CF₂CF₃.

In the formulas (b1-1-i) and (b1-1-ii), R¹ is each independently a group represented by the following formula:

-(Y)_{f}-(CF₂)_{g}-(CH₂)ₕ-

wherein Y is a divalent polar group. Examples of the divalent polar group include, but are not limited to, - COO-, -OCO-, -CONH-, -OCH₂CH(OH)CH₂-, -CH₂CH(OH)CH₂O-, - COS-, -SCO-, and -O-, and the divalent polar group is preferably -COO-, -CONH-, -CH₂CH(OH)CH₂O-, or -O-. In the formula, f, g, and h are each independently an integer of 0 to 50 and preferably 0 to 20 such as 1 to 20, and the sum of f, g, and h is at least 1 and preferably 1 to 10. More preferably, f, g, and h are integers of 0 to 2, and further preferably f=0 or 1, g=2, and h=0 or 1. Further, the occurrence order of the respective repeating units enclosed in parentheses provided with a subscript f, g, and h is not limited in the formula.

In a preferred embodiment, the compound (b1-1) is a compound represented by the formula (b1-1-i):

Rf¹-PFPE-R¹-CH₂OH (b1-1-i)

### [(b1-2) Monomer containing active hydrogen and carbon-carbon double bond]

The monomer (b1-2) having active hydrogen and a carbon-carbon double bond is preferably (meth)acrylic acid ester or a vinyl monomer having active hydrogen, or a hydroxyl group in particular. Specific examples of monomer (b2) include:

HO(CH₂CH₂)ᵢOCO(R¹⁸)C=CH₂

(wherein R¹⁸ is a hydrogen atom, a chlorine atom, a fluorine atom, or an alkyl group having 1 to 10 carbon atoms optionally substituted with fluorine, and i=1 to 10) such as 2-hydroxyethyl (meth)acrylate and 4-hydroxybutyl (meth)acrylate;

CH₃CH(OH)CH₂OCO(R¹⁸)C=CH₂

(wherein R¹⁸ is a hydrogen atom, a chlorine atom, a fluorine atom, or an alkyl group having 1 to 10 carbon atoms optionally substituted with fluorine) such as 2-hydroxypropyl (meth)acrylate;

CH₃CH₂CH(OH)CH₂OCO(R¹⁸)C=CH₂

(wherein R¹⁸ is a hydrogen atom, a chlorine atom, a fluorine atom, or an alkyl group having 1 to 10 carbon atoms optionally substituted with fluorine) such as 2-hydroxybutyl (meth)acrylate;

C₆H₅OCH₂CH(OH)CH₂OCO(R¹⁸)C=CH₂

(wherein R¹⁸ is a hydrogen atom, a chlorine atom, a fluorine atom, or an alkyl group having 1 to 10 carbon atoms optionally substituted with fluorine) such as 2-hydroxy-3-phenoxypropyl (meth)acrylate;

HOCH₂C(CH₂OCO(R¹⁸)C=CH₂)₃

(wherein R¹⁸ is a hydrogen atom, a chlorine atom, a fluorine atom, or an alkyl group having 1 to 10 carbon atoms optionally substituted with fluorine) such as pentaerythritol triacrylate;

C(CH₂OCO(R¹⁸)C=CH₂)₃CH₂OCH₂C(CH₂OCO(R¹⁸)C=CH₂)₂CH₂OH

(wherein R¹⁸ is a hydrogen atom, a chlorine atom, a fluorine atom, or an alkyl group having 1 to 10 carbon atoms optionally substituted with fluorine) such as dipentaerythritol polyacrylate;

HOCH₂CH₂OCOC₆H₄COOCH₂CH₂OCO(R¹⁸)C=CH₂

(wherein R¹⁸ is a hydrogen atom, a chlorine atom, a fluorine atom, or an alkyl group having 1 to 10 carbon atoms optionally substituted with fluorine) such as 2-acryloyloxyethyl-2-hydroxyethyl phthalate;

H(OCH₂CH₂)ₙ₁₁OCO(R¹⁸)C=CH₂

(wherein n11 is 1 to 30, and R¹⁸ is a hydrogen atom, a chlorine atom, a fluorine atom, or an alkyl group having 1 to 10 carbon atoms optionally substituted with fluorine) such as poly(ethylene glycol) acrylate;

H(OCH(CH₃)CH₂)ₙ₁₁OCO(R¹⁸)C=CH₂

(wherein n11 is 1 to 30, and R¹⁸ is a hydrogen atom, a chlorine atom, a fluorine atom, or an alkyl group having 1 to 10 carbon atoms optionally substituted with fluorine) such as poly(propylene glycol) acrylate;

HO(CH₂)ₖCH=CH₂

(k=1 to 20);
(CH₃)₃SiCH(OH)CH=CH₂; and
styrylphenol.

### [(b1-3) Other compounds having active hydrogen]

The other compound (b1-3) is preferably a compound having neither a perfluoropolyether group nor a carbon-carbon double bond and having at least one active hydrogen. The compound (b1-3) may be a compound having one active hydrogen-containing group, such as a hydroxyl group, at one molecular end or one active hydrogen-containing group, such as a hydroxyl group, at each of the two ends. Preferable examples of the compound (b1-3) include:
a monovalent alcohol consisting of a linear or branched hydrocarbon having 1 to 16 carbon atoms,
a secondary amine consisting of a linear or branched hydrocarbon having 1 to 16 carbon atoms,
an secondary amine having an aromatic group,
an Rf alcohol: Q(CF₂)ₗ(CH=CH)ₘ(CHI)ₙ(CH₂)ₒOH (wherein Q is a hydrogen atom, a fluorine atom, or a (CF₃)₂CF- group, l is an integer of 1 to 10, m and n are each independently 0 or 1, and o is an integer of 1 to 10),
a polyalkylene glycol monoester: such as R³(OCH₂CH₂)ₚOH and R³(OCH₂CH₂CH₂)_{q}OH (wherein R³ is a linear or branched hydrocarbon having 1 to 16 carbon atoms, an acetyl group, or an alkylphenoxy group, and p and q are each independently an integer of 1 to 20),
an aromatic alcohol, and
a silane compound having active hydrogen.

Specific examples of the silane compound having active hydrogen include (CH₃)₃Si(CH₂)ₛ₁OH (s1 is an integer of 1 to 20) and compounds having the following structures:

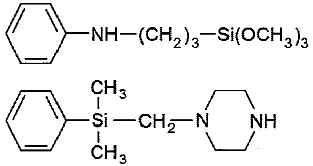

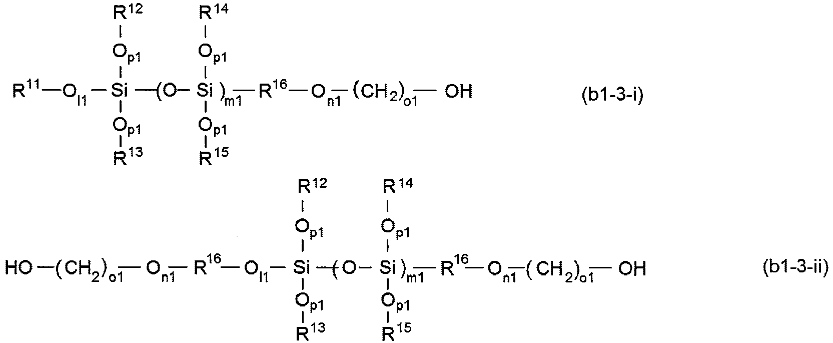

The number average molecular weight of the silane compound having active hydrogen, which is compound (b1-3), is not limited and may be 100 to 20,000, preferably 500 to 15,000, and more preferably 800 to 12,000.

In the formulas (b1-3-i) and (b1-3-ii), R¹¹, R¹⁸, R¹³, R¹⁴, and R¹⁵ are each independently an alkyl group or an aryl group.

Examples of the alkyl group include, but are not limited to, an alkyl group having 1 to 10 carbon atoms and a cycloalkyl group having 3 to 20 carbon atoms, preferably an alkyl group having 1 to 6 carbon atoms. Such alkyl group may be linear or branched, but it is preferably linear. A preferable specific example is a n-butyl group for R¹¹, and is a methyl group for R¹⁸ to R¹⁵.

Examples of the aryl group include, but are not limited to, an aryl group having 6 to 20 carbon atoms. Such aryl group may contain 2 or more rings. A preferable aryl group is a phenyl group.

The alkyl group and aryl group may contain a heteroatom such as a nitrogen atom, an oxygen atom and a sulfur atom in their molecular chain or ring, if desired.

Furthermore, the alkyl group and aryl group may be substituted with one or more substituents selected from a halogen atom; and a C₁₋₆ alkyl group, a C₂₋₆ alkenyl group, a C₂₋₆ alkynyl group, a C₃₋₁₀ cycloalkyl group, an unsaturated C₃₋₁₀ cycloalkyl group, a 5 to 10-membered heterocyclyl group, an unsaturated 5 to 10-membered heterocyclyl group, a C₆₋₁₀ aryl group and a 5 to 10-membered heteroaryl group, all of which are optionally substituted with one or more halogen atoms.

In the formulas (b1-3-i) and (b1-3-ii), R¹⁶ represents a divalent organic group. Preferably, R¹⁶ is -(CH₂)ᵣ-(wherein r is an integer of 1 to 20 and preferably an integer of 1 to 10).

In the formulas (b1-3-i) and (b1-3-ii), l1 and n1 are each independently 0 or 1; m1 is an integer of 1 to 500, preferably 1 to 200, and more preferably an integer of 5 to 150; o1 is an integer of 0 to 20 such as an integer of 1 to 20; and p1 is 0 or 1.

Specific examples of the compound represented by the formula (b1-3-i) include the following compounds:

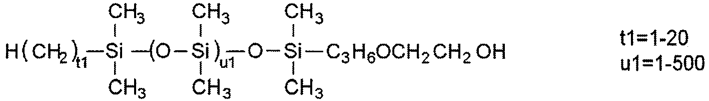

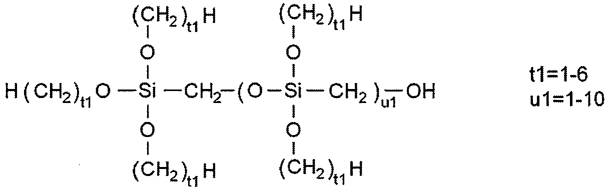

Also, the compound (b1-3) may be a silane compound having an amino group as an active hydrogen-containing group. Examples of such compounds include, but are not limited to, the following compounds. Here, m is 1 to 500.

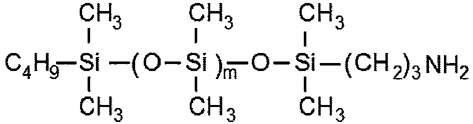

The compounds (b1-1), (b1-2), and (b1-3) may be in the range of 0.1 to 2 moles, 5 to 8.85 moles, and 0.05 to 2 moles, respectively, based on 9 moles of the isocyanate group in (A).

In one embodiment, the component (A) preferably contains a structure in which -NHC(=O)-, which is a moiety derived from the isocyanate group of the compound (a1), is bound to a moiety obtained by removing of active hydrogen from the compound (b1). More preferably, the component (A) comprises an Rₓ₁-C(=O)NH- structure and an Rₓ₂-C(=O)NH-structure. Here, C(=O) represents a carbonyl group. For example, Rₓ₁ is Rf¹-PFPE-R¹-CH₂O- or HOCH₂-R¹-PFPE-R¹-CH₂O-; and Rₓ₂ has a structure represented by one of the following formulas:

CH₂=C(R¹⁸)COO(CH₂CH₂)ᵢO-,

CH₂=C(R¹⁸)COOCH₂CH(CH₃)O-,

CH₂=C(R¹⁸)COOCH₂CH(CH₂CH₃)O-,

CH₂=C(R¹⁸)COOCH₂CH(CH₂OC₆H₅)O-,

(CH₂=C(R¹⁸)COOCH₂)₃CCH₂O-,

C(CH₂COO(R¹⁸)C=CH₂)₃CH₂OCH₂C(CH₂OCO(R¹⁸)C=CH₂)₂CH₂O-,

CH₂=C(R¹⁸)COOCH₂CH₂OCOC₆H₄COOCH₂CH₂O-,

CH₂=C(R¹⁸)COO(CH₂CH₂O)ₙ₁₁-,

CH₂=C(R¹⁸)COO(CH₂CH(CH₃)O)ₙ₁₁-,

CH₂=CH(CH₂)ₖO-,

CH₂=CHCH(Si(CH₃)₃)O-, or

Ar-Ph-O-. Here, Ph is a benzene ring in which some hydrogen atoms may be substituted, and Ar is a structure having at least a styryl group. R¹, R¹⁸, Rf¹, n11, i, k, and PFPE are as described above.

The specific structure of the component (A) of the present embodiment is not limited, and an example may be what is shown below:

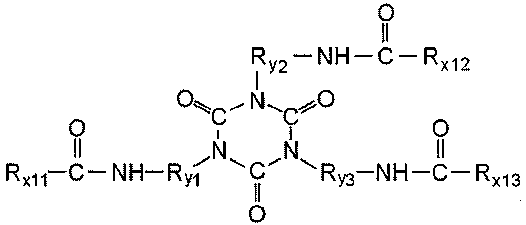

Here, Rₓ₁₁, Rₓ₁₂, and Rₓ₁₃ are each independently Rₓ₁, Rₓ₂, or Rₓ₃; at least one of Rₓ₁₁, Rₓ₁₂, and Rₓ₁₃ is Rₓ₁; and at least one of Rₓ₁₁, Rₓ₁₂, and Rₓ₁₃ is Rₓ₂. R_{y1}, R_{y2}, and R_{y3} are each independently an alkylene group having 1 to 10 carbon atoms, preferably -(CH₂)ₙ₅- (wherein n5 is an integer of 1 to 10, preferably an integer of 3 to 6, and typically 6), or structures shown below. Here, * represents a bond. Rₓ₁ and Rₓ₂ are as described above. Rₓ₃ is a structure obtained by removing of active hydrogen from the compound (b1-3).

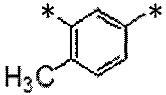

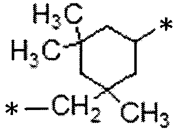

In one embodiment, the compound (C) may be a compound represented by any one of the general formulas (A1), (A2), and (A3):

Rf-R¹-R²-R³-(R⁴)ₙ₁ -R⁵-R⁶ ··· (A1)

R⁶-R⁵-(R⁴)ₙ₁-R³-R²-R¹-R²-R³-(R⁴)ₙ₁ -R⁵-R⁶··· (A2)

(Rf-R¹-R²)ₙ₂-R⁷-(R⁸-OC(O)CX¹=CH₂)ₙ₃ ··· (A3)

wherein Rf represents an alkyl group having 1 to 16 carbon atoms optionally substituted with one or more fluorine atoms;
R¹ is a fluoro(poly)ether group;
R² is a group represented by the following formula:

   -(Q)ₕ-(CFZ)ᵢ-(CH₂)ⱼ-

   wherein Q represents an oxygen atom, phenylene, carbazolylene, -NR^{a}- where R^{a} represents a hydrogen atom or an organic group, or a divalent polar group; Z represents a hydrogen atom, a fluorine atom or a lower fluoroalkyl group; h, i, and j are each independently an integer of 0 or more and 50 or less; the sum of h, i, and j is at least 1; and the occurrence order of the respective repeating units enclosed in parentheses is not limited in the formula;
R³ represents a divalent organic group;
R⁴, each independently at each occurrence, represents R^{4a} or R^{4b}, provided that at least one R⁴ is R^{4a};
R^{4a}, each independently at each occurrence, represents a divalent organic group having a curable site;
R^{4b}, each independently at each occurrence, represents a divalent organic group not having a curable site;
n1 is an integer of 1 or more and 50 or less;
R⁵ represents -O-, -S-, -NH- or a single bond;
R⁶ represents Rf-R¹-R², wherein Rf, R¹, and R² the same meaning as described above, a monovalent organic group, or a hydrogen atom;
R⁷ represents an organic group having a valence of (n2 + n3) that optionally has a ring structure, a heteroatom and/or a functional group;
R⁸ represents a divalent organic group;
X¹ represents a hydrogen atom, a chlorine atom, a fluorine atom, or an alkyl group having 1 to 10 carbon atoms optionally substituted with fluorine;
n2 is an integer of 1 or more and 3 or less; and
n3 is an integer of 1 or more and 3 or less.

As used herein, unless otherwise specified, examples of the "alkyl group" include an alkyl group having 1 to 12 (preferably 1 to 6, more preferably 1 to 3, and still more preferably 1) carbon atoms (e.g., a methyl group, an ethyl group, a propyl group, and an isopropyl group). Such "alkyl group" may be linear or branched, but is preferably linear.

As used herein, unless otherwise specified, the "hydrocarbon group" means a group containing carbon and hydrogen. The "hydrocarbon group" is not limited, and examples include a hydrocarbon group that has 1 to 20 carbon atoms and that is optionally substituted with one or more substituents, such as an aliphatic hydrocarbon group and an aromatic hydrocarbon group. The "aliphatic hydrocarbon group" may be either linear, branched, or cyclic, and may be either saturated or unsaturated. The hydrocarbon group may contain one or more ring structures. The hydrocarbon group may have one or more of N, O, S, Si, amide, sulfonyl, siloxane, carbonyl, carbonyloxy, and the like at the terminal or in the molecular chain thereof.

As used herein, unless otherwise specified, examples of the substituent of the "hydrocarbon group" include, but are not limited to, a halogen atom; and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5 to 10-membered heterocyclyl group, a 5 to 10-membered unsaturated heterocyclyl group, a C₆₋₁₀ aryl group and a 5 to 10-membered heteroaryl group each optionally substituted with one or more halogen atoms.

As used herein, unless otherwise specified, the "organic group" or "monovalent organic group" means a group containing carbon. Examples of the "organic group" or "monovalent organic group" include, but are not limited to, the above-described hydrocarbon groups. Also, the "divalent organic group" means a divalent group derived by further removing one hydrogen atom from the "monovalent organic group".

In the formulas (A1) and (A3), Rf represents an alkyl group having 1 to 16 carbon atoms optionally substituted with one or more fluorine atoms.

The alkyl group having 1 to 16 carbon atoms optionally substituted with one or more fluorine atoms is a linear or branched alkyl group having 1 to 16 carbon atoms optionally substituted with one or more fluorine atoms, preferably a linear or branched alkyl group having 1 to 3 carbon atoms optionally substituted with one or more fluorine atoms, and more preferably an alkyl group having 1 to 3 carbon atoms optionally substituted with one or more fluorine atoms. Preferably, the alkyl group optionally substituted with one or more fluorine atoms is a fluoroalkyl group wherein the terminal carbon atom is CF₂H- and all other carbon atoms are fully substituted with fluorine or a perfluoroalkyl group, more preferably a perfluoroalkyl group, and specifically -CF₃, -CF₂CF₃, or -CF₂CF₂CF₃.

In the formula, R¹ is a fluoro(poly)ether group as described above.

In the formulas (A1) and (A2), R² is a group represented by the formula: - (Q)ₕ-(CFZ)ᵢ-(CH₂)ⱼ-. Here h, i, and j are each independently an integer of 0 or more and 50 or less; the sum of h, i, and j is at least 1; and the occurrence order of the respective repeating units enclosed in parentheses is not limited in the formula.

In the formula, Q represents an oxygen atom, phenylene, carbazolylene, -NR^{a}- where R^{a} represents a hydrogen atom or an organic group, or a divalent polar group, and it is preferably an oxygen atom or a divalent polar group, and more preferably an oxygen atom.

Examples of the "divalent polar group" in Q are not limited, but include -C(O)-, -C(=NR^{b})- and -C(O)NR^{b}-, wherein R^{b} represents a hydrogen atom or a lower alkyl group. The "lower alkyl group" is, for example, an alkyl group having 1 to 6 carbon atoms, such as methyl, ethyl and n-propyl, which are optionally substituted with one or more fluorine atoms.

In the formula, Z represents a hydrogen atom, a fluorine atom or a lower fluoroalkyl group, and is preferably a fluorine atom.

The "lower fluoroalkyl group" is, for example, a fluoroalkyl group having 1 to 6 carbon atoms, preferably 1 to 3 carbon atoms, preferably a perfluoroalkyl group having 1 to 3 carbon atoms, more preferably a trifluoromethyl group or a pentafluoroethyl group, and still more preferably a trifluoromethyl group.

R² is preferably a group represented by the formula: - (O)ₕ-(CF₂)ᵢ-(CH₂)ⱼ-, wherein h, i, and j have the same meaning as that described above, and the occurrence order of the respective repeating units enclosed in parentheses is not limited in the formula.

Examples of the group represented by the formula: - (O)ₕ-(CF₂)i-(CH₂)ⱼ- include, for example, a group represented by -(O)_{h'}-(CF₂)_{i'}-(CH₂)_{j'}-O-[(CH₂)_{j"}-O-]_{j‴}, wherein h' is 0 or 1, i', j' and j" are each independently an integer of 1 to 10, and j‴ is 0 or 1.

In the formulas (A1) and (A2), R³ represents a divalent organic group.

The R³ group is preferably -C(R^{3a}) (R^{3b})-. wherein R^{3a} and R^{3b} each independently represent a hydrogen atom or an alkyl group, and either R^{3a} or R^{3b} is preferably an alkyl group.

In the formulas (A1) and (A2), R⁴, each independently at each occurrence, represents R^{4a} or R^{4b}, provided that at least one R⁴ is R^{4a}.

R^{4a}, each independently at each occurrence, represents a divalent organic group having a curable site.

The "curable site" is not limited, and examples include an allyl group, a cinnamic acid group, a sorbic acid group, an acryloyl group, and a methacryloyl group (hereinafter an acryloyl group and a methacryloyl group may be collectively referred to as a "(meth)acryloyl group").

A preferable curable site varies depending on the material to be coated and, for example, when the material is an amorphous synthetic resin (such as an acrylic resin), the "curable site" is preferably an allyl group, a cinnamic acid group, a sorbic acid group, or CH₂=CX¹-C(O)- (wherein X¹ represents a hydrogen atom, a chlorine atom, a fluorine atom, or an alkyl group having 1 to 10 carbon atoms optionally substituted with a fluorine atom (such as a (meth)acryloyl group), and is more preferably an acryloyl group or a methacryloyl group.

R^{4a} is preferably a group represented by the following formula:

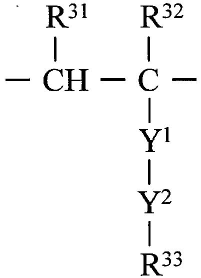

In the formula, R³¹, each independently at each occurrence, represents a hydrogen atom or an alkyl group. Such R³¹ is preferably a hydrogen atom.

In the formula, R³², each independently at each occurrence, represents a hydrogen atom or an alkyl group. Such R³² is preferably a methyl group or a hydrogen atom, and is more preferably a hydrogen atom.

In the formula, R³³, each independently at each occurrence, represents an organic group having a curable site.

Examples of such a curable site include those equivalent to the above-described ones, but it is preferably CH₂=CX¹-C(O)-, wherein X¹ represents a hydrogen atom, a chlorine atom, a fluorine atom, or an alkyl group having 1 to 10 carbon atoms optionally substituted with fluorine, and specific examples thereof include CH₂=C(CH₃)-C(O)- or CH₂=CH-C(O)-.

In the formula, Y¹ represents -O-, -N(R^{C})-, phenylene or carbazolylene, wherein R^{c} represents an organic group, and is preferably an alkyl group.

Y¹ is preferably -O-, phenylene or carbazolylene, more preferably -O- or phenylene, and still more preferably -O-.

In the formula, Y² represents a linker whose backbone has 1 to 16 (more preferably 2 to 12, and still more preferably 2 to 10) carbon atoms. Examples of the Y² are not limited, but include, for example, -(CH₂-CH₂-O) ₚ₁-, wherein p1 represents an integer of 1 to 10, for example, an integer of 2 to 10, -(CHR^{d})ₚ₂-O-, wherein p2 is an integer of 1 to 40 and R^{d} represents hydrogen or a methyl group, - (CH₂-CH₂-O) ₚ₃-CO-NH-CH₂-CH₂-O-, wherein p3 represents an integer of 1 to 10, for example, an integer of 2 to 10, -CH₂-CH₂-O-CH₂-CH₂-, -(CH₂)ₚ₄-, wherein p4 represents an integer of 1 to 6, -(CH₂)ₚ₅-O-CONH-(CH₂)ₚ₆-, wherein p5 represents an integer of 1 to 8, preferably 2 or 4 and p6 represents an integer of 1 to 6, preferably 3, or -O-, provided that Y¹ is not -O-. Preferable examples of Y² include -(CH₂-CH₂-O)ₚ₁-, wherein p1 represents an integer of 1 to 10, for example, an integer of 2 to 10, or -(CHR^{d})ₚ₂-O-, wherein p2 is an integer of 1 to 40 and R^{d} represents hydrogen or a methyl group, and specific examples thereof include -(CH₂-CH₂-O)₂- or -CH₂-CH₂-O-. Note that, in these groups, the left end is bonded to the side of the molecular backbone (the side of Y¹) and the right end is bonded to the side of the curable site (the side of R³³).

R^{4a} is still more preferably a group represented by the following formula: 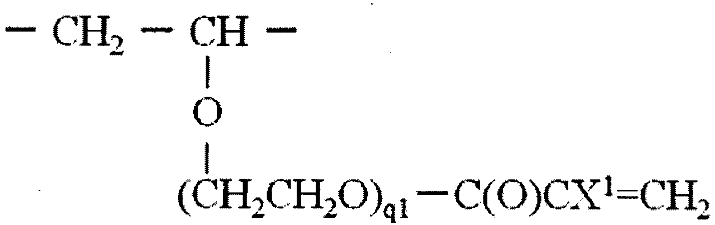 or

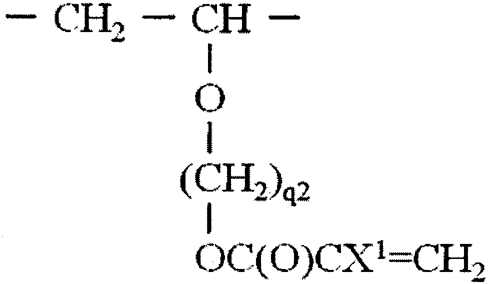

In the formula, X¹ represents a hydrogen atom, a chlorine atom, a fluorine atom, or an alkyl group having 1 to 10 carbon atoms optionally substituted with fluorine, and is preferably a hydrogen atom or an alkyl group having 1 to 10 carbon atoms such as a methyl group. In the formula, q1 is an integer of 1 to 10, and preferably an integer of 1 to 5 such as 1 or 2. q2 is an integer of 1 to 10, and preferably an integer of 1 to 5 such as 2.

R^{4b} is each independently at each occurrence a divalent organic group not having a curable site.

R^{4b} is preferably -(CHR^{4c}-CR^{4d}R^{4e})ₛ-. Here, R^{4c} and R^{4d} each independently represent a hydrogen atom or an alkyl group; s is an integer of 0 to 50; and the R^{4e} group is - Q'-R^{4f}. Here, Q' has the same meaning as Q, R^{4f} is an organic group not having a curable site, and is a group that a R^{4g} group described later is bonded via a linker or directly to Q'.

The linker is preferably as follows:
(a) -(CH₂-CH₂-O)ₛ₁-, wherein s1 represents an integer of 1 to 10, for example, an integer of 2 to 10;
(b) -(CHR^{4h}) _{S2}-O-, wherein s2 represents the number of repetitions, which is an integer of 1 to 40, and R^{4h} represents hydrogen or a methyl group;
(c) -(CH₂-CH₂-O)ₛ₁-CO-NH-CH₂-CH₂-O-, wherein s1 has the same meaning as that described above;
(d)

   -CH₂-CH₂-O-CH₂-CH₂-;
(e) -(CH₂)ₛ₃-, wherein s3 represents an integer of 1 to 6; or
(f) -(CH₂)ₛ₄-O-CONH-(CH₂)ₛ₅-, wherein s4 represents an integer of 1 to 8, preferably 2 or 4, and s5 represents an integer of 1 to 6, preferably 3; or
(g) -O-, provided that Q' is not -O-.

R^{4g} is preferably the following group:
(i) an alkyl group
   examples: methyl and ethyl
(ii) a chain group containing an alkyl group substituted with fluorine
   examples: 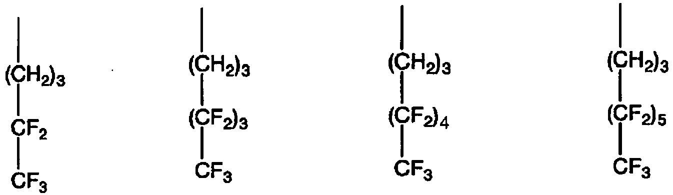 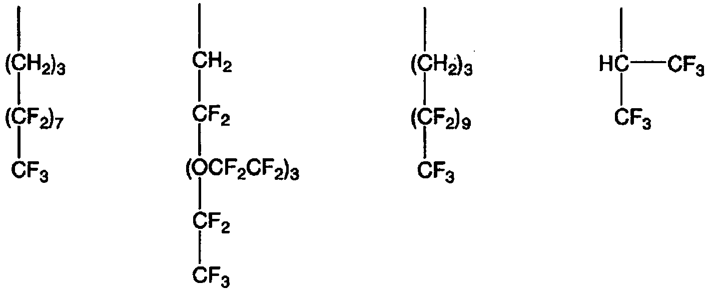 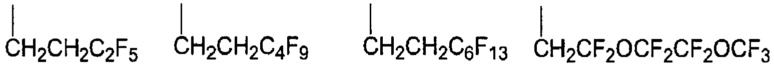 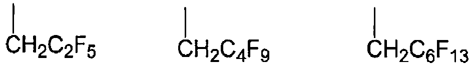
(iii) a group containing one or more cyclic moieties selected from the group consisting of a monocyclic carbocycle, a bicyclic carbocycle, a tricyclic carbocycle and a tetracyclic carbocycle
   examples: 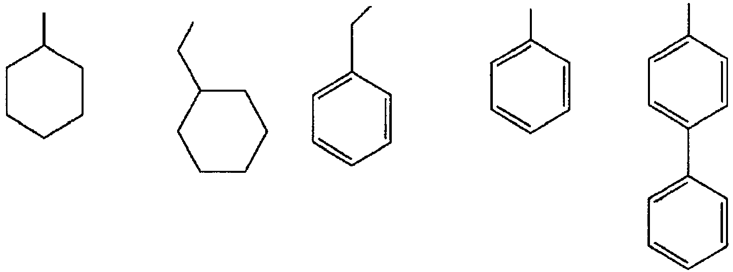 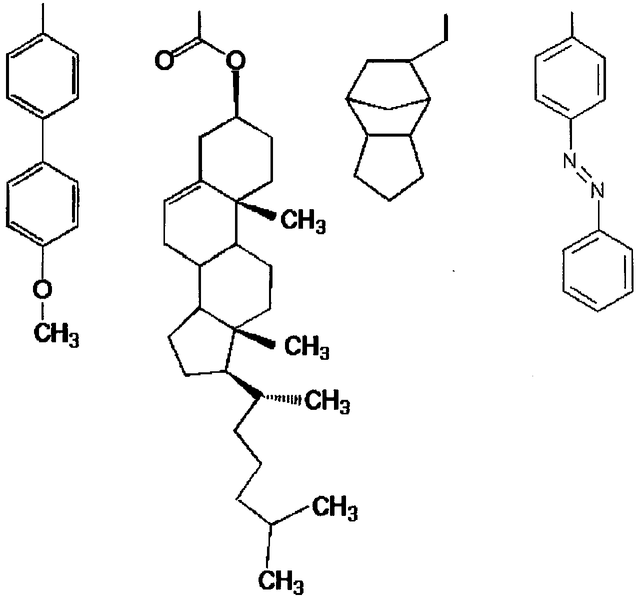
(iv) a group containing a hydrocarbon group substituted with one or more (preferably one or two) carboxy groups
   examples: 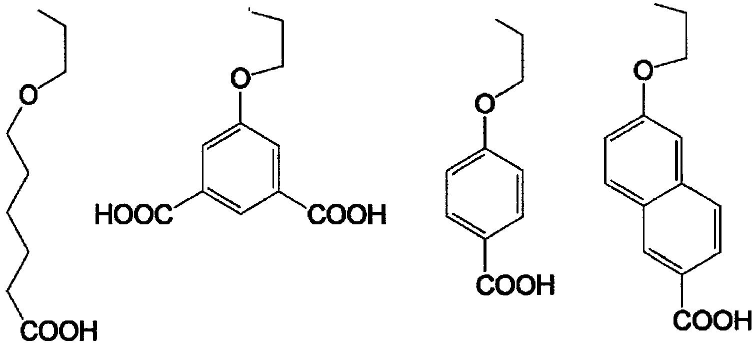
(v) a group containing one or more (preferably one) amino groups
(vi) hydrogen
(vii) a group containing an imidazolium salt examples:

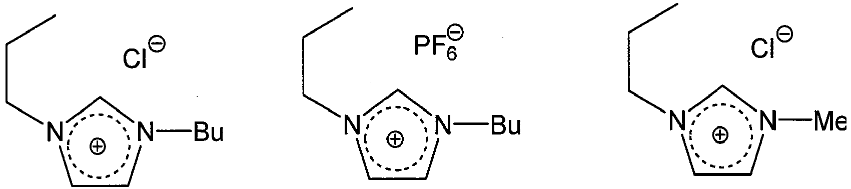

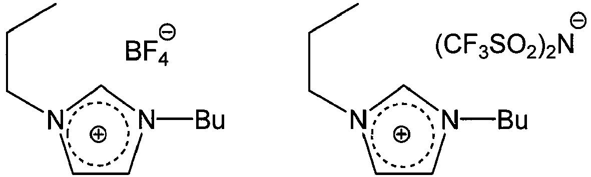

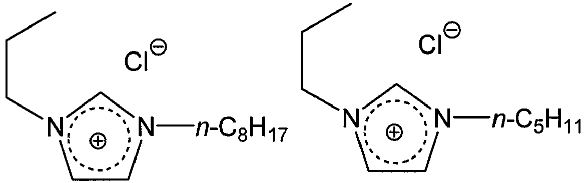

R^{4g} is more preferably a hydrogen atom or an alkyl group that may be fluorinated and bonded via an ethylene chain; more preferably a hydrogen atom, a methoxyethyl group, an isobutyl group or R³ⁱ-CF₂-(CF₂)ₛ₆-(CH₂)ₛ₇-O-(CH₂)₂-, wherein R^{x} is a fluorine atom or a hydrogen atom, s6 is an integer of 0 to 6, and s7 is an integer of 1 to 6; and still more preferably a 3-(perfluoroethyl) propoxyethyl group [rational formula: CF₃-(CF₂)-(CH₂)₃-O-(CH₂)₂-].

In R⁴, the structural unit R^{4a} and the structural unit R^{4b} may each form a block or may be bonded randomly.

In the formulas (A1) and (A2), n1 is an integer of 1 or more and 100 or less, preferably an integer of 1 or more and 50 or less, and still more preferably an integer of 2 or more and 30 or less.

In the formulas (A1) and (A2), R⁵ represents -O-, -S-, -NH- or a single bond, and is preferably -O-.

In the formulas (A1) and (A2), R⁶ represents Rf-R¹-R² (wherein Rf, R¹, and R² the same meaning as described above), a monovalent organic group, or a hydrogen atom.

R⁶ is preferably an alkyl group having 1 to 10 carbon atoms optionally substituted with fluorine, more preferably an alkyl group having 1 to 6 carbon atoms, and still more preferably methyl.

In the formula (A3), R⁷ represents an organic group having a valence of (n2 + n3) that optionally has a ring structure, a heteroatom and/or a functional group.

In the formula (A3), n2 is an integer of 1 or more and 3 or less.

In the formula (A3), n3 is an integer of 1 or more and 3 or less.

Preferably, n2 + n3 is 3, and for example, n2 is 1 and n3 is 2, or n2 is 2 and n3 is 1.

Examples of the "organic group having a valence of (n2 + n3) that optionally has a ring structure, a heteroatom and/or a functional group" in R⁷ include, for example, a group derivatized by, from a monovalent organic group, further removing (n2 + n3 - 1) hydrogen atoms.

R⁷ is preferably a group represented by the following formula:

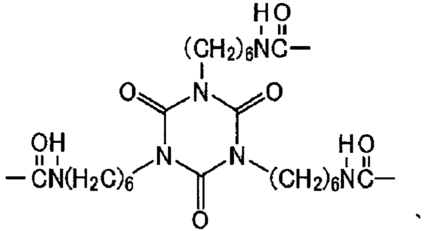

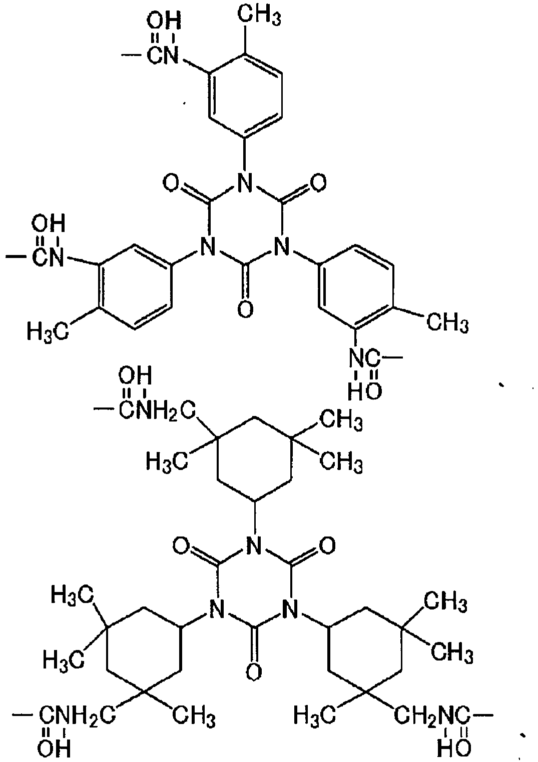

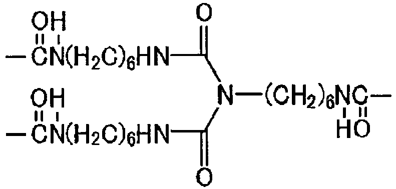

More preferably, R⁷ is a group represented by the following formula:

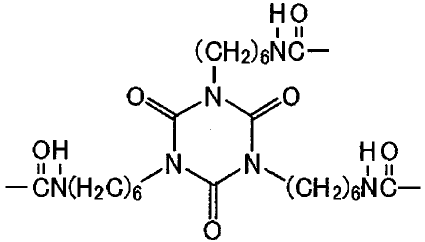

In the formula (A3), R⁸ represents a divalent organic group. Such R⁸ is preferably -O-(CH₂)ᵣ-, wherein r is an integer of 1 or more and 10 or less, preferably an integer of 1 or more and 3 or less, or -NH-(CH₂)ᵣ-, wherein r has the same meaning as that described above, and is more preferably -O-(CH₂)ᵣ-, wherein r is an integer of 1 or more and 3 or less.

In the formula (A3), X¹ represents a hydrogen atom, a chlorine atom, a fluorine atom, or an alkyl group having 1 to 10 carbon atoms optionally substituted with fluorine.

X¹ is preferably a hydrogen atom or an alkyl group having 1 to 10 carbon atoms, more preferably a hydrogen atom or an alkyl group having 1 to 6 carbon atoms, and still more preferably a hydrogen atom or methyl.

The compounds represented by the formulas (A1) to (A3) are not limited, and may have a number-average molecular weight of about 5 × 10² to 1 × 10⁵. In particular, the number average molecular weight is preferably about 2,000 to 10,000, from the viewpoint of friction durability. The number-average molecular weight can be determined by ¹⁹F-NMR.

In one embodiment, the compound (C) is represented by the following formula (1):

R^{F1}_{α} - X^{A} - R^{D}_{β} (1)

R^{D}_{γ}-X^{A}-R^{F2}-X^{A}-R^{D}_{γ} (2)

wherein
R^{F1} is each independently at each occurrence Rf¹-R^{F}-O_{q};
R^{F2} is -Rf²ₚ-R^{F}-O_{q}-;
Rf¹ is each independently at each occurrence a C₁₋₁₆ alkyl group optionally substituted with one or more fluorine atoms;
Rf² is a C₁₋₆ alkylene group optionally substituted with one or more fluorine atoms;
R^{F} is each independently at each occurrence a divalent fluoropolyether group;
p is 0 or 1;
q is each independently at each occurrence 0 or 1;
X^{A} is each independently a single bond or a di- to decavalent organic group;
R^{D} is each independently at each occurrence a group containing a carbon-carbon double bond;
α is an integer of 1 to 9;
β is an integer of 1 to 9; and
γ is each independently an integer of 1 to 9.

In the formula (1), R^{F1} is each independently at each occurrence Rf¹-R^{F}-O_{q}-.

In the formula (2), R^{F2} is -Rf²ₚ-R^{F}-O_{q}-.

In the formula, Rf¹ is each independently at each occurrence a C₁₋₁₆ alkyl group optionally substituted with one or more fluorine atoms.

In the C₁₋₁₆ alkyl group optionally substituted with one or more fluorine atoms, the "C₁₋₁₆ alkyl group" may be linear or branched, and is preferably a linear or branched C₁₋₆ alkyl group, in particular C₁₋₃ alkyl group, and more preferably a linear C₁₋₆ alkyl group, in particular C₁₋₃ alkyl group.

Rf¹ is preferably a C₁₋₁₆ alkyl group substituted with one or more fluorine atoms, more preferably a CF₂H-C₁₋₁₅ perfluoroalkylene group, and still more preferably a C₁₋₁₆ perfluoroalkyl group.

The C₁₋₁₆ perfluoroalkyl group may be linear or branched, and is preferably a linear or branched C₁₋₆ perfluoroalkyl group, in particular C₁₋₃ perfluoroalkyl group, more preferably a linear C₁₋₆ perfluoroalkyl group, in particular C₁₋₃ perfluoroalkyl group, and specifically - CF₃, -CF₂CF₃, or -CF₂CF₂CF₃.

In the formula, Rf² is a C₁₋₆ alkylene group optionally substituted with one or more fluorine atoms.

In the C₁₋₆ alkylene group optionally substituted with one or more fluorine atoms, the "C₁₋₆ alkylene group" may be linear or branched, and is preferably a linear or branched C₁₋₃ alkylene group, and more preferably a linear C₁₋₃ alkylene group.

Rf² is preferably a C₁₋₆ alkylene group that is substituted with one or more fluorine atoms, more preferably a C₁₋₆ perfluoroalkylene group, and still more preferably a C₁₋₃ perfluoroalkylene group.

The C₁₋₆ perfluoroalkylene group may be linear or branched, and is preferably a linear or branched C₁₋₃ perfluoroalkylene group, more preferably a linear C₁₋₃ perfluoroalkylene group, and specifically -CF₂-, -CF₂CF₂-, or -CF₂CF₂CF₂-.

In the formula, p is 0 or 1. In one embodiment, p is 0. In another embodiment, p is 1.

In the formulas, q is each independently at each occurrence 0 or 1. In one embodiment, q is 0. In another embodiment, q is 1.

In R^{F1} and R^{F2} above, R^{F} is each independently at each occurrence a divalent fluoropolyether group.

R^{F} may be a fluoro(poly)ether group as described above.

In the formulas, X^{A} each independently represents a single bond or a 2 to 10 valent organic group. X^{A} is understood as a linker linking R^{D} and a group having R^{F2} or R^{F1}. Thus, X^{A} may be any organic group as long as compounds represented by formulas (1) and (2) can be stably present.

In the formulas, α is an integer of 1 to 9, β is an integer of 1 to 9, and γ is an integer of 1 to 9. The integers represented by α, β, and γ are determined in accordance with the valence of X^{A}, and in the formula (1), the sum of α and β is equal to the valence of X^{A}. For example, when X^{A} is a decavalent organic group, the sum of α and β is 10; for example, a case where α is 9 and β is 1, and α is 5 and β is 5, or α is 1 and β is 9, can be considered. When X^{A} is a divalent organic group, α and β each are 1. In the formula (2), the value of γ is obtained by subtracting 1 from the valence of X^{A}.

X^{A} preferably represents a 2 to 7 valent organic group, more preferably a 2 to 4 valent organic group, and still more preferably a divalent organic group. α, β, and γ may be an integer of 1 to 6, an integer of 1 to 3, 1, or the like according to X^{A}.

Examples of X^{A} include, but are not limited to, a divalent group represented by the following formula:

-(R³¹)_{p'}-(X^{a})_{q'}-_{R}³²-

wherein
R³¹ represents a single bond, -(CH₂)_{s'}- or o-, m- or p-phenylene group and preferably -(CH₂)_{s'}-,
R³² represents a single bond, -(CH₂)_{t'}- or o-, m- or a p-phenylene group, and preferably -(CH₂)_{t'}-,
wherein s' represents an integer of 1 to 20, preferably 1 to 6, more preferably 1 to 3 and still further preferably 1 or 2,
t' is an integer of 1 to 20, preferably an integer of 2 to 6, and more preferably an integer of 2 to 3,
X^{a} represents - (X^{b})_{r'}-,
X^{b}, each independently at each occurrence, represents a group selected from the group consisting of a -O-, -S-, o-, m-, or p-phenylene group, a substituted or unsubstituted C₃₋₁₀ cycloalkylene, a substituted or unsubstituted o-, m-, or p-phenylene group, -C(O)O-,-CONR³⁴-, -O-CONR³⁴-, -NR³⁴-, -Si(R³³)₂-, -(Si(R³³)₂O)_{m'}-Si(R³³)2-, and -(CH₂)_{n'}-.
the substituent has the same meaning as the substituent of the hydrocarbon group described above,
wherein R³³ is each independently at each occurrence a phenyl group, a C₁₋₆ alkyl group or a C₁₋₆ alkoxy group, preferably a C₁₋₆ alkyl group, and more preferably a methyl group,
R³⁴, each independently at each occurrence, represents a hydrogen atom, a phenyl group or a C₁₋₆ alkyl group (preferably a methyl group),
m', at each occurrence, is independently an integer of 1 to 100, preferably an integer of 1 to 20,
n', at each occurrence, is independently an integer of 1 to 20, preferably an integer of 1 to 6, more preferably an integer of 1 to 3,
r' is an integer of 1 to 10, preferably an integer of 1 to 5, and more preferably an integer of 1 to 3,
p' is 0 or 1, and
q' is 0 or 1,
provided that at least one of p' and q' is 1, and the occurrence order of the respective repeating units in parentheses provided with p' or q' is not limited.

R^{D} is each independently at each occurrence a group containing a carbon-carbon double bond.

The group containing a carbon-carbon double bond in R^{D} is represented by -Y-A (wherein Y represents a single bond, an oxygen atom, or a divalent organic group; A represents - CR¹¹=CH₂; and R¹¹ each independently represents a hydrogen atom or a C₁₋₃ alkyl group (preferably a methyl group)).

Y represents a single bond or a divalent organic group. Y is preferably a single bond, an oxygen atom, - CR²⁴₂- or -CO-, and more preferably -CO-.

R²⁴, each independently at each occurrence, represents a hydrogen atom or a lower alkyl group. The lower alkyl group is preferably an alkyl group having 1 to 6 carbon atoms, more preferably a methyl group. In a preferred embodiment, R²⁴ is a hydrogen atom.

In a preferred embodiment, R^{D} is represented by the following formula (D1), (D2), or (D3):

- Y - A (D1)

- SiR^{a1}ₖ₁R^{b1}ₗ₁ (D2)

- CR^{d1}ₖ₂R^{e1}ₗ₂R^{f1}ₘ₂ (D3)

wherein
Y and A have the same meaning as that described above;
R^{a1} is each independently at each occurrence -Z¹-Y-A;
Z¹ is each independently at each occurrence an oxygen atom or a divalent organic group;
R^{b1} is each independently at each occurrence a hydrogen atom, a hydroxyl group, or a monovalent organic group;
k1 is each independently at each occurrence an integer of 1 to 3;
l1 is each independently at each occurrence an integer of 0 to 2;
R^{d1} is each independently at each occurrence -Z²-CR³¹ₚ₂R³²_{q2}R³³ᵣ₂ ;
Z² is each independently at each occurrence a single bond, an oxygen atom or a divalent organic group;
R³¹ is each independently at each occurrence -Z^{2'}-CR^{32'}_{q2'}R^{33'}_{r2'} ;
R³² is each independently at each occurrence -Z³-Y-A;
R³³ is each independently at each occurrence a hydrogen atom, a hydroxyl group, or a monovalent organic group;
p2 is each independently at each occurrence an integer of 0 to 3;
q2 is each independently at each occurrence an integer of 0 to 3;
r2 is each independently at each occurrence an integer of 0 to 3;
Z^{2'} is each independently at each occurrence a single bond, an oxygen atom or a divalent organic group;
R^{32'} is each independently at each occurrence -Z³-Y-A;
R^{33'} is each independently at each occurrence a hydrogen atom, a hydroxyl group, or a monovalent organic group;
q2' is each independently at each occurrence an integer of 0 to 3;
r2' is each independently at each occurrence an integer of 0 to 3;
Z³ is each independently at each occurrence a single bond, an oxygen atom or a divalent organic group;
R^{e1} is each independently at each occurrence -Z³-Y-A;
R^{f1} is each independently at each occurrence a hydrogen atom, a hydroxyl group, or a monovalent organic group;
k2 is each independently at each occurrence an integer of 0 to 3;
l2 is each independently at each occurrence an integer of 0 to 3;
m2 is each independently at each occurrence an integer of 0 to 3; and
at least one A is present in the formula (D3).

In the formula, R^{a1} is each independently at each occurrence -Z¹-Y-A.

Z¹ is each independently at each occurrence an oxygen atom or a divalent organic group. The structure denoted as Z¹ hereinafter is bonded to (SiR²¹ₚ₁R²²_{q1}R²³ᵣ₁) on the right side.

In a preferred embodiment, Z¹ is a divalent organic group.

Z¹ is preferably a C₁₋₆ alkylene group, -(CH₂)_{z1}-O-(CH₂)_{z2}- (wherein z1 is an integer of 0 to 6, for example, an integer of 1 to 6, and z2 is an integer of 0 to 6, for example, an integer of 1 to 6), -(CH₂)_{z3}-phenylene-(CH₂)_{z4}-(wherein z3 is an integer of 0 to 6, for example, an integer of 1 to 6, and z4 is an integer of 0 to 6, for example, an integer of 1 to 6) or -(CH₂)_{z5}-C₃₋₁₀ cycloalkylene-(CH₂)_{z6}- (wherein z5 is an integer of 0 to 6, for example, an integer of 1 to 6, and z6 is an integer of 0 to 6, for example, an integer of 1 to 6). Such a C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, but are preferably unsubstituted.

In a preferred embodiment, Z¹ is a C₁₋₆ alkylene group or -(CH₂)_{z3}-phenylene-(CH₂)_{z4}-, and preferably -phenylene-(CH₂)_{z4}-. When Z¹ is such a group, light resistance, in particular ultraviolet resistance, can be more increased.

In another preferred embodiment, Z¹ is a C₁₋₃ alkylene group. In one embodiment, Z¹ may be -CH₂CH₂CH₂-. In another embodiment, Z¹ may be -CH₂CH₂-.

In the formula, R^{b1} is each independently at each occurrence a hydrogen atom, a hydroxyl group, or a monovalent organic group. Such a monovalent organic group is a monovalent organic group excluding the hydrolyzable group.

In R^{b1}, the monovalent organic group is preferably a C₁₋₂₀ alkyl group, more preferably a C₁₋₆ alkyl group, and still more preferably a methyl group.

k1 is each independently at each occurrence an integer of 1 to 3, and l1 is each independently at each occurrence an integer of 0 to 2. The sum of k1 and l1 is 3.

In a preferred embodiment, in the formula (D2), k1 is 2 or 3, preferably 3.

R^{d1} is each independently at each occurrence -Z²-CR³¹ₚ₂R³²_{q2}R³³ᵣ₂.

Z² is each independently at each occurrence a single bond, an oxygen atom or a divalent organic group. The structure denoted as Z² hereinafter is bonded to (CR³¹ₚ₂R³²_{q2}R³³ᵣ₂) on the right side.

In a preferred embodiment, Z² is a divalent organic group.

Z² is preferably a C₁₋₆ alkylene group, -(CH₂)_{z5}-O-(CH₂)_{z6}- (wherein z5 is an integer of 0 to 6, for example, an integer of 1 to 6, and z6 is an integer of 0 to 6, for example, an integer of 1 to 6), -(CH₂)_{z7}-phenylene-(CH₂)_{z8}-(wherein z7 is an integer of 0 to 6, for example, an integer of 1 to 6, and z8 is an integer of 0 to 6, for example, an integer of 1 to 6) or -(CH₂)_{z9}-C₃₋₁₀ cycloalkylene-(CH₂)_{z10}- (wherein z9 is an integer of 0 to 6, for example, an integer of 1 to 6, and z10 is an integer of 0 to 6, for example, an integer of 1 to 6). Such a C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, but are preferably unsubstituted.

In a preferred embodiment, Z² is a C₁₋₆ alkylene group or -(CH₂)_{z7}-phenylene-(CH₂)_{z8}-, and preferably -phenylene-(CH₂)_{z8}-. When Z² is such a group, light resistance, in particular ultraviolet resistance, can be more increased.

In another preferred embodiment, Z² is a C₁₋₃ alkylene group. In one embodiment, Z² may be -CH₂CH₂CH₂-. In another embodiment, Z² may be -CH₂CH₂-.

R³¹ is each independently at each occurrence -Z^{2'}-CR^{32'}q_{2'}R^{33'}_{r2'}.

Z^{2'} is each independently at each occurrence a single bond, an oxygen atom or a divalent organic group. The structure denoted as Z^{2'} hereinafter is bonded to (CR^{32'}_{q2'}R^{33'}_{r2'}) on the right side.

Z^{2'} is preferably a C₁₋₆ alkylene group, -(CH₂)_{z5'}-O-(CH₂)_{z6'}- (wherein z5' is an integer of 0 to 6, for example, an integer of 1 to 6, and z6' is an integer of 0 to 6, for example, an integer of 1 to 6), -(CH₂)_{z7'}-phenylene-(CH₂)_{z8'}-(wherein z7' is an integer of 0 to 6, for example, an integer of 1 to 6, and z8' is an integer of 0 to 6, for example, an integer of 1 to 6) or - (CH₂)_{z9'}-C₃₋₁₀ cycloalkylene-(CH₂)_{z10'}- (wherein z9' is an integer of 0 to 6, for example, an integer of 1 to 6, and z10' is an integer of 0 to 6, for example, an integer of 1 to 6). Such a C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, but are preferably unsubstituted.

In a preferred embodiment, Z^{2'} is a C₁₋₆ alkylene group or - (CH₂) _{z7'}-phenylene- (CH₂) _{z8'}-, and preferably -phenylene-(CH₂) _{z8'}-. When Z^{2'} is such a group, light resistance, in particular ultraviolet resistance, can be more increased.

In another preferred embodiment, Z^{2'} is a C₁₋₃ alkylene group. In one embodiment, Z^{2'} may be -CH₂CH₂CH₂-. In another embodiment, Z^{2'} may be -CH₂CH₂-.

R^{32'} is each independently at each occurrence -Z³-Y-A.

Z³ is each independently at each occurrence a single bond, an oxygen atom or a divalent organic group. The structure denoted as Z³ hereinafter is bonded to Y on the right side.

In one embodiment, Z³ is an oxygen atom.

In one embodiment, Z³ is a divalent organic group.

Z³ is preferably a C₁₋₆ alkylene group, -(CH₂)_{z5"}-O-(CH₂)_{z6"}- (wherein z5" is an integer of 0 to 6, for example, an integer of 1 to 6, and z6'' is an integer of 0 to 6, for example, an integer of 1 to 6), -(CH₂)_{z7"}-phenylene-(CH₂)_{z8"}- (wherein z7" is an integer of 0 to 6, for example, an integer of 1 to 6, and z8'' is an integer of 0 to 6, for example, an integer of 1 to 6) or -(CH₂)_{z9"}-C₃₋₁₀ cycloalkylene-(CH₂)_{z10"}- (wherein z9'' is an integer of 0 to 6, for example, an integer of 1 to 6, and z10" is an integer of 0 to 6, for example, an integer of 1 to 6). Such a C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, but are preferably unsubstituted.

In a preferred embodiment, Z³ is a C₁₋₆ alkylene group or -(CH₂)_{z7"}-phenylene-(CH₂)_{z8"}-, and preferably -phenylene-(CH₂)_{z8"}-. When Z³ is such a group, light resistance, in particular ultraviolet resistance, can be more increased.

In another preferred embodiment, Z³ is a C₁₋₃ alkylene group. In one embodiment, Z³ may be -CH₂CH₂CH₂-. In another embodiment, Z³ may be -CH₂CH₂-.

R^{33'} is each independently at each occurrence a hydrogen atom, a hydroxyl group, or a monovalent organic group. Such a monovalent organic group is a monovalent organic group excluding the hydrolyzable group.

In R^{33'}, the monovalent organic group is preferably a C₁₋₂₀ alkyl group, more preferably a C₁₋₆ alkyl group, and still more preferably a methyl group.

In another embodiment, the monovalent organic group as R^{33'} is preferably a C₁₋₂₀ alkyl group, more preferably a C₁₋₆ alkyl group.

q2' is each independently at each occurrence an integer of 0 to 3, and r2' is each independently at each occurrence an integer of 0 to 3. The sum of q2' and r2' is 3 in the (CR^{32'}_{q2'}R^{33'}_{r2'}) unit.

q2' is each independently an integer of preferably 1 to 3, more preferably 2 to 3, still more preferably 3 for each (CR^{32'}_{q2'}R^{33'}_{r2'}) unit.

R³² is each independently at each occurrence -Z³-Y-A. Such -Z³-Y-A has the same definition as described in R^{32'}.

R³³ is each independently at each occurrence a hydrogen atom, a hydroxyl group, or a monovalent organic group. Such a monovalent organic group is a monovalent organic group excluding the hydrolyzable group.

In R³³, the monovalent organic group is preferably a C₁₋₂₀ alkyl group, more preferably a C₁₋₆ alkyl group, and still more preferably a methyl group.

In another embodiment, the monovalent organic group as R³³ is preferably a C₁₋₂₀ alkyl group, more preferably a C₁₋₆ alkyl group.

p2 is each independently at each occurrence an integer of 0 to 3, q2 is each independently at each occurrence an integer of 0 to 3, and r2 is each independently at each occurrence an integer of 0 to 3. The sum of p2, q2, and r2 is 3 in the (CR³¹ₚ₂R³²_{q2}R³³ᵣ₂) unit.

In one embodiment, p2 is 0.

In one embodiment, p2 may be each independently an integer of 1 to 3, an integer of 2 to 3, or 3 for each (CR³¹ₚ₂R³²_{q2}R³³ᵣ₂) unit. In a preferred embodiment, p2' is 3.

In one embodiment, q2 is an integer of 1 to 3, preferably 2 to 3, and more preferably 3, each independently in each (CR³¹ₚ₂R³²_{q2}R³³ᵣ₂) unit.

In one embodiment, p2 is 0, and q2 is an integer of 1 to 3, preferably 2 to 3, and still more preferably 3, each independently in each (CR³¹ₚ₂R³²_{q2}R³³ᵣ₂) unit.

R^{e1} is each independently at each occurrence -Z³-Y-A. Such -Z³-Y-A has the same definition as described in R^{32'}.

R^{f1} is each independently at each occurrence a hydrogen atom, a hydroxyl group, or a monovalent organic group. The monovalent organic group is a monovalent organic group other than the hydrolyzable group.

In R^{f1}, the monovalent organic group is preferably a C₁₋₂₀ alkyl group, more preferably a C₁₋₆ alkyl group, and still more preferably a methyl group.

In another embodiment, the monovalent organic group as R^{f1} is preferably a C₁₋₂₀ alkyl group, more preferably a C₁₋₆ alkyl group.

k2 is each independently at each occurrence an integer of 0 to 3, l2 is each independently at each occurrence an integer of 0 to 3, and m2 is each independently at each occurrence 0 to 3. The sum of k2, 12, and m2 is 3 in the (CR^{d1}ₖ₂R^{e1}₁₂R^{f1}ₘ₂) unit.

In a preferable embodiment, in the formula (D3), k2 is 0, l2 is 2 or 3, preferably 3, and n2 is 2 or 3, preferably 3.

In one embodiment, R^{D} is a group represented by the formula (D1).

In one embodiment, R^{D} is a group represented by the formula (D2).

In one embodiment, R^{D} is a group represented by the formula (D3).

Examples of the commercially available compound (C) include the followings:
Optool (R) DAC-HP (Daikin Industries, Ltd.)
Fluorolink (R) MD700 (Solvay S.A.)
Fluorolink (R) AD1700 (Solvay S.A.)
Fomblin (R) MT70 (Solvay S.A.)
SHIN-ETSU SUBELYNK KY-1203 (Shin-Etsu Chemical Co., Ltd.)
SHIN-ETSU SUBELYNK KY-1211 (Shin-Etsu Chemical Co., Ltd.)
SHIN-ETSU SUBELYNK KY-1207 (Shin-Etsu Chemical Co., Ltd.)

The component (C) may be used alone or as a mixture of two or more compounds as the component (C).

The content of the component (C) based on the total mass of the polymerizable composition is 0.1% by mass to 10% by mass or less, and preferably 0.2% by mass to 8% by mass. When the content of the component (C) is 0.1% by mass or more, the content of the component (C) on the surface of the polymer layer becomes sufficient, and excellent water- and oil-repellency, surface lubricity and the like can be obtained. By improving the surface lubricity, the abrasion resistance is also improved. Further, when the content of the component (C) is 10% by mass or less, the miscibility with other components in the polymerizable composition can be kept high. By increasing the miscibility, the separation of the components can be suppressed, and as a result, the concentration of the component (C) on the surface of the polymer layer (surface opposite to the support) can be made uniform, and excellent antifouling properties and abrasion resistance can be obtained. Further, when the content of the component (C) is set to 10% by mass or less, it is possible to suppress the distribution of the component (C) on the support side of the polymer layer, and as a result, it is possible to suppress the lowering of the adhesion between the polymer layer and the substrate, and moreover, it is possible to suppress the bleed-out under the environment of high temperature and high humidity, and high reliability (optical characteristics) can thus be obtained.

### (Component (D))

The component (D) is a polymerization initiator.

Examples of the polymerization initiator include a photopolymerization initiator and a thermopolymerization initiator. The polymerization initiator is preferably a photopolymerization initiator. The photopolymerization initiator is a compound which is active to an active energy ray and initiates a polymerization reaction for polymerizing a monomer.

Examples of the photopolymerization initiator include, but are not limited to, a radical polymerization initiator, an anionic polymerization initiator, and a cationic polymerization initiator. Examples of such a photopolymerization initiator include acetophenones such as p-tert-butyltrichloroacetophenone, 2,2'-diethoxyacetophenone, and 2-hydroxy-2-methyl-1-phenylpropan-1-one; ketones such as benzophenone, 4,4'-bisdimethylaminobenzophenone, 2-chlorothioxanthone, 2-methylthioxanthone, 2-ethylthioxanthone, and 2-isopropylthioxanthone; benzoin ethers such as benzoin, benzoin methyl ether, benzoin isopropyl ether, and benzoin isobutyl ether; benzyl ketals such as benzyl dimethyl ketal and hydroxycyclohexyl phenyl ketone; acylphosphine oxides such as 2,4,6-trimethylbenzoyl-diphenyl-phosphine oxide and bis(2,4,6-trimethylbenzoyl)-phenylphosphine oxide; and alkylphenones such as 1-hydroxy-cyclohexyl-phenyl-ketone.

Examples of the commercially available photopolymerization initiator include the followings: 2,4,6-trimethylbenzoyl-diphenyl-phosphine oxide:
IRGACURE(R) TPO (IGM Resins)
   bis(2,4,6-trimethylbenzoyl)-phenylphosphine oxide:

IRGACURE(R) 819 (IGM Resins)
   1-hydroxy-cyclohexyl-phenyl-ketone:
IRGACURE(R) 184 (IGM Resins)

The component (D) may be used alone or as a mixture of two or more of the polymerization initiators.

The content of the component (D) based on the total mass of the polymerizable composition is 0.1% by mass to 10% by mass, and preferably 0.2% by mass to 8% by mass.

### (Component (E))

The polymerizable composition of the present disclosure may further contain a component (E) different from the components (A) to (D) in addition to the components (A) to (D). Such a component (E) is used for imparting appropriate transparency, viscosity, refractive index, flexibility and the like to a polymerizable composition and/or a cured product thereof.

The compound of component (E) preferably has one or more carbon-carbon double bonds and may contain fluorine. Examples of the compound of component (E) include, but are not limited to, polyethylene glycol diacrylate, ethoxylated glycerol triacrylate, dipentaerythritol hexaacrylate, acryloyl morpholine, propoxylated pentaerythritol triacrylate, and tripropylene glycol diacrylate.

Examples of the commercially available component (E) include the followings:
polyethylene glycol diacrylate:
   BLEMMER (R) ADE-400A (NOF Corporation)
   BLEMMER (R) ADE-300 (NOF Corporation)
   A-1000 (Shin-Nakamura Chemical Industry Co., Ltd.) ethoxylated glycerol triacrylate:
      A-GLY-9E (Shin-Nakamura Chemical Industry Co., Ltd.) dipentaerythritol hexaacrylate:
      A-DPH (Shin-Nakamura Chemical Industry Co., Ltd.) acryloyl morpholine:
      ACMO (KJ Chemicals Corporation)
propoxylated pentaerythritol triacrylate:
   ATM-4PL (Shin-Nakamura Chemical Industry Co., Ltd.) tripropylene glycol diacrylate:
   APG-200 (Shin-Nakamura Chemical Industry Co., Ltd.)

The component (E) may be used alone or as a mixture of two or more compounds as the above component.

The content of component (E) based on the total mass of the polymerizable composition may preferably be 55% by mass or less, more preferably 45% by mass or less, and still more preferably 35% by mass or less.

### (Solvent)

The polymerizable composition of the present disclosure may further contain a solvent. Examples of such a solvent include alcohols (having 1 to 10 carbon atoms, such as methanol, ethanol, n- or i-propanol, n-, sec-, or, t-butanol, benzyl alcohol, and octanol), ketones (having 3 to 8 carbon atoms, such as acetone, methyl ethyl ketone, methyl isobutyl ketone, diisobutyl ketone, dibutyl ketone, and cyclohexane), esters or ether esters (having 4 to 10 carbon atoms, such ones such as ethyl acetate, butyl acetate, and ethyl lactate), γ-butyrolactone, ethylene glycol monomethyl acetate, propylene glycol monomethyl acetate, ethers (having 4 to 10 carbon atoms, such ones such as EG monomethyl ether (methyl cellosolve), EG monomethyl ether (ethyl cellosolve), diethylene glycol monobutyl ether (butyl cellosolve), and propylene glycol monomethyl ether), aromatic hydrocarbons (having 6 to 10 carbon atoms, such ones such as benzene, toluene, and xylene), amides (having 3 to 10 carbon atoms, such ones such as dimethylformamide, dimethylacetamide, and N-methylpyrrolidone), halogenated hydrocarbons (having 1 to 2 carbon atoms, such ones such as methylene dichloride and ethylene dichloride), and petroleum-based solvents (e.g., petroleum ether, petroleum naphtha).

The solvent may be used alone or as a mixture of two or more thereof.

### (Laminate)

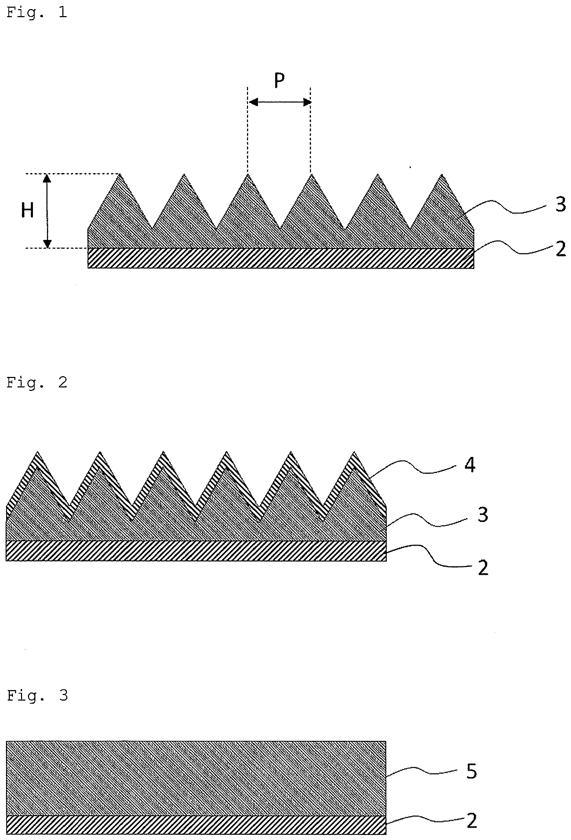

As shown in FIG. 1, a laminate of the present disclosure includes a support 2 and a polymer layer 3 having, on a surface thereof, an uneven structure in which a plurality of protruding portions are provided at a pitch equal to or less than a wavelength of visible light, and the polymer layer is a layer obtained by curing the polymerizable composition of the present disclosure.

### (Support)

The support 2 is not limited as long as the polymer layer of the polymerizable composition of the present disclosure can be formed on the surface thereof, but is preferably in the form of a film.

The thickness of the support 2 is not limited, but is, for example, preferably 50 to 100 µm and more preferably 60 to 80 µm. When the thickness of the support is within the above range, transparency and processability can be easily ensured.

Various kinds of film-shaped plastics and glasses having transparency can be used as material constituting the support 2. Examples of the material of the plastic film having transparency include a resin such as a polyester-based resin, an acetate-based resin, a polyether sulfone-based resin, a polycarbonate-based resin, a polyamide-based resin, a polyimide-based resin, a polyolefin-based resin, a (meth)acrylic-based resin, a polyvinyl chloride-based resin, a polyvinylidene chloride-based resin, a polystyrene-based resin, a polyvinyl alcohol-based resin, a polyarylate-based resin, a polyphenylene sulfide-based resin and a norbornene-based resin. Specifically, polyethylene terephthalate (PET), polyethylene naphthalate (PEN), triacetyl cellulose (TAC), polyether sulfone, polycarbonate (PC), polyarylate, polyetheretherketone, a cycloolefin polymer (COP), a cycloolefin copolymer (COC), a PMMA-PC laminated film or the like is preferred. In addition, polyethylene terephthalate and polyethylene naphthalate are excellent in mechanical strength, dimensional stability, heat resistance, chemical resistance, optical characteristics, and so forth, and smoothness on a film surface and handling properties, and therefore further preferred. Polycarbonate is excellent in transparency, impact resistance, heat resistance, dimensional stability and flammability, and therefore further preferred. Triacetyl cellulose is small in optical anisotropy, and therefore further preferred.

The support 2 may further contain appropriate additives such as a plasticizer in addition to the above material.

A surface of the support 2 may have undergone easy adhesion treatment (e.g., primer treatment). For example, a triacetyl cellulose film or polyethylene terephthalate film after easy adhesion treatment may be used as the support. A surface of the support may have undergone saponification treatment. For example, a saponified triacetyl cellulose film may be used as the support. Furthermore, it is possible to use a super-birefringent polyester film in which coloring and rainbow unevenness due to birefringence are suppressed.

### (Polymer layer)

The polymer layer 3 is a layer formed by the effect of the polymerizable composition of the present disclosure.

The thickness of the polymer layer 3 may preferably be 1 µm to 20 µ m, and more preferably 5 µm to 15 µm.

The polymer layer 3 preferably has an uneven structure in which a plurality of protruding portions are provided at a pitch equal to or less than a wavelength of visible light.

The shape of the uneven structure is not limited, and either the shape of the recessed portion or the protruding portions may be any of a pillar shape, a conical shape, a bell shape, a polygonal prism shape such as a triangular prism and a quadrangular prism, or a frustum shape thereof. Further, the uneven structure may have a high shape regularity or may be random. In a preferred embodiment, the uneven structure has regularly arranged protruding portions having a shape such as a conical shape.

The shape of the protruding portion is preferably substantially cylindrical, but is not limited to this, and may be another shape, for example, a polygonal prism shape such as a triangular prism or a quadrangular prism, or a frustum shape thereof having a narrow apex.

In a preferred embodiment, the uneven structure is preferably a so-called moth-eye structure in which a plurality of substantially cylindrical shapes are arranged.

The pitch between the protruding portions present on the surface of the polymer layer 3 (distances P between peaks of adjacent protruding portions 7) is preferably 20 nm to 400 nm, more preferably 50 nm to 350 nm, and still more preferably 100 nm to 300 nm. When the pitch is within the above range, higher antireflection performance can be obtained.

The height of the protruding portions present on the surface of the polymer layer 3 is preferably 50 nm to 500 nm, more preferably 50 nm to 400 nm, and still more preferably 100 nm to 300 nm. When the height is within the above range, higher antireflection performance can be obtained.

The aspect ratio of the protruding portions present on the surface of the polymer layer 3 is preferably 0.13 to 25, more preferably 0.3 to 10, and still more preferably 1.0 to 5.0. When the aspect ratio is within the above range, the reflectance becomes lower. Here, the aspect ratio refers to a ratio (H/P) of the pitch P between adjacent protruding portions to the height H of the protruding portions.

### (Other Layers)

In one embodiment, as shown in FIG. 2, another antifouling layer 4 may be provided on the surface of the polymer layer 3 (surface opposite to the support). The antifouling layer 4 may be formed by a step of applying and drying a composition containing a soil resistant agent after carrying out the following step 1, or may be formed by a step of applying and drying a composition containing a soil resistant agent after carrying out the following step 4.

The laminate of the present disclosure is suitably used as an antireflection layer. Therefore, the laminate of the present disclosure can be suitably used in an optical film (such as an antireflection film for a display), an optical element, a decorative film (interior decoration, exterior decoration), and the like. These can be used for televisions, vehicle-mounted displays, various optical sensors, PCs (such as desktop PCs and laptop PCs), mobile terminals (such as smartphones, tablets, and electronic readers), digital signage, and the like. These can also be suitably used for bulletin boards, showrooms, stadiums, restaurants, show windows, showcases, art displays, and the like in which visibility through a low-reflection transparent material is required.

### (Method for producing laminate)

A method for producing the laminate of the present disclosure includes:
(1) applying the polymerizable composition of the present disclosure onto a surface of a support to form a polymerizable composition layer;
(2) pressing the polymerizable composition layer against a metal mold to form an uneven structure on the surface of the polymerizable composition layer;
(3) curing the polymerizable composition layer having the uneven structure on the surface to form a polymer layer; and
(4) releasing the metal mold from the polymer layer.

### (Step 1)

In step 1, as shown in FIG. 3, the polymerizable composition of the present disclosure is applied onto a surface of a support to form a polymerizable composition layer 5. Examples of techniques of applying the polymerizable composition include spray coating, gravure coating, slot-die coating, and bar coating. Gravure coating or slot-die coating is preferred in order to level the thickness of the resulting film and to achieve good productivity.

When the polymerizable composition contains a solvent (volatile component), heating (drying) may be performed to remove the solvent after application of the polymerizable composition. The heating temperature is not limited, but is preferably equal to or higher than the boiling point of the solvent.

### (Step 2)

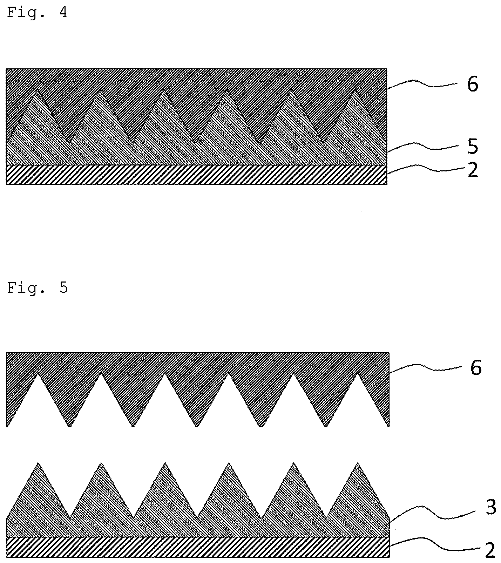

In step 2, as shown in FIG. 4, the polymerizable composition layer 5 is pressed against a metal mold 6 to form an uneven structure on the surface of the polymerizable composition layer. At this time, the polymerizable composition layer is sandwiched between the metal mold and the support. As a result, the uneven structure on the surface of the metal mold is transferred to the surface of the polymerizable composition layer (surface on the side opposite to the support side).

### (Step 3)

In step 3, the polymerizable composition layer 5 having an uneven structure on the surface is cured to form a polymer layer 3. As a result, a polymer layer having the uneven structure on a surface thereof is formed.

Examples of the method for curing the polymerizable composition layer include a method by irradiation with active energy rays, heating, and the like. Curing of the polymerizable composition layer is preferably performed by application of active energy rays, more preferably by application of ultraviolet rays. Application of active energy rays may be performed from the support side of the polymerizable composition, or may be performed from the metal mold side of the polymerizable composition. Application of active energy rays may be performed once or may be performed multiple times. The step 3 may be performed simultaneously with the step 2.

Examples of the active energy ray include, but are not limited to, electromagnetic waves in a wave length region of 350 nm or less, that is, ultraviolet rays, electronic beams, X-rays, and γ-rays.

### (Step 4)

In step 4, as shown in FIG. 5, the metal mold 6 is released from the polymer layer 3. As a result, the laminate of the present disclosure is obtained.

### (Alternative method)

As an alternative method of the steps 1 and 2, the polymerizable composition of the present disclosure may be applied to a surface of a metal mold to form a polymerizable composition layer, and then a support may be pressed against the polymerizable composition layer on the metal mold to form an uneven structure on a surface of the polymerizable composition layer in a state in which the polymerizable composition layer is sandwiched between the metal mold and the support.

### (Metal mold)

The metal mold has an uneven structure corresponding to the uneven structure of the polymer layer on a surface thereof.

Examples of the shape of the metal mold include, but are not limited to, a flat plate shape and a roll shape.

In one embodiment, the shape of the metal mold is a roll shape having an uneven structure on an outer peripheral surface thereof. By using such a metal mold, the steps 1 to 4 can be continuously and efficiently performed, and the productivity can be improved.

Examples of the material of the metal mold include, but are not limited to, glass; metals such as stainless steel and nickel; polyolefin-based resins such as polypropylene, polymethylpentene, and cyclic olefinic polymers (typified by norbornene-based resin, e.g., "Zeonor (R)" manufactured by Zeon Corp., "Arton (R)" manufactured by JSR Corp.); polycarbonate resin; and resins such as polyethylene terephthalate, polyethylene naphthalate, and triacetyl cellulose.

Examples of the method of producing the uneven structure of the metal mold include, but are not limited to, an anodizing method, a photolithography method, a laser drawing method, an electron beam drawing method, a plasma etching method, and a machine cutting method.

The surface of the metal mold preferably has undergone mold release treatment. By subjecting the surface of the metal mold to a mold release treatment, the metal mold can be easily released from the polymer layer. Further, since the surface free energy of the metal mold becomes low, when the support is pressed against the metal mold in the step 2, the compound (C) can be uniformly oriented on the surface of the polymerizable composition layer on the side in contact with the metal mold, and the antifouling property is improved.

Examples of the mold release agent used in the mold release treatment of the metal mold include fluorine-based compounds, silicon-based compounds, and phosphoric ester-based compounds. In particular, fluorine-based compounds are preferable, and examples thereof include Optool (R) DSX (Daikin Industries, Ltd.).

Hereinafter, an article of the present disclosure will be described in Examples, but the present disclosure is not limited to the following Examples.

### Example

Compounds shown in Table 1 below were prepared as compounds of components (A), (B), and (E).

**[Table 1]**

| | Manufacturer | Monomer: product name / chemical name | | Number of alkylene oxide | Number of (meth)acrylic | Molecular weight | alkylene oxide equivalent | (meth)acrylic equivalent |
|---|---|---|---|---|---|---|---|---|
| Component (A) | KYOEISHA CHEMICAL Co., LTD, | LIGHT ACRYLATE 3EG-A | polyethylene glycol diacrylate(EO3mol) | 3 | 2 | 258 | 86 | 129 |
| | Shin-Nakamura Chemical Industry Co., Ltd. | 3G | polyethylene glycol dimethacrylate (EO3mol) | 3 | 2 | 286 | 95 | 143 |
| | NOF Corporation | BLEMMER ADE-200 | polyethylene glycol diacrylate(EO4mol) | 4 | 2 | 302 | 76 | 151 |
| | Nippon Kayaku Co., Ltd. | KAYARAD DPEA-12 | ethylene oxide 12 mole modified dipentaerythritol hexaacrylate | 12 | 6 | 1107 | 92 | 185 |
| Component (B) | Tokyo Chemical Industry | M0506 | N,N'-methylenebisacrylamide | 0 | 2 | 154 | 0 | 77 |
| | Toagosei Co., Ltd. | ARONIX M-930 | glycerol triacrylate | 0 | 3 | 254 | 0 | 85 |
| | Shin-Nakamura Chemical Industry Co., Ltd. | A-TMM-3LM-N | pentaerythritol triacrylate | 0 | 3 | 298 | 0 | 99 |
| | Shin-Nakamura Chemical Industry Co., Ltd. | A-TMPT | trimethylolpropane triacrylate | 0 | 3 | 296 | 0 | 99 |
| | Toagosei Co., Ltd. | ARONIX T-920 | glycerol diacrylate | 0 | 2 | 200 | 0 | 100 |
| Component (E) | NOF Corporation | BLEMMER ADE-400A | polyethylene glycol diacrylate (EO9mol) | 9 | 2 | 508 | 56 | 254 |
| | NOF Corporation | BLEMMER ADE-300 | polyethylene glycol diacrylate (EO7mol) | 7 | 2 | 440 | 63 | 220 |
| | Shin-Nakamura Chemical Industry Co., Ltd. | A-GLY-9E | Ethoxylated glycerine triacrylate(EO9mol) | 9 | 3 | 811 | 90 | 270 |
| | Shin-Nakamura Chemical Industry Co., Ltd. | A-1000 | polyethylene glycol diacrylate (EO23mol) | 23 | 2 | 1108 | 48 | 554 |
| | Shin-Nakamura Chemical Industry Co., Ltd. | A-DPH | dipentaerythritol hexaacrylate | 0 | 6 | 578 | 0 | 96 |
| | KJ Chemicals Corporation | ACMO | acryloyl morpholine | 0 | 1 | 141 | 0 | 141 |
| | Shin-Nakamura Chemical Industry Co., Ltd. | ATM-4PL | propoxylated pentaerythritol triacrylate (PO4mol) | 4 | 3 | 531 | 133 | 177 |
| | Shin-Nakamura Chemical Industry Co., Ltd. | APG-200 | tripropylene glycol diacrylate (PO3mol) | 3 | 2 | 300 | 100 | 150 |

Optool (R) DAC-HP (Daikin Industries, Ltd.) was prepared as the component (C).

Omnirad TPO (IGM Resins B.V.) was prepared as the component (D).

For comparison with the component (C), CHEMINOX (R) FAAC-6 (UNIMATEC CO., LTD., 2-(perfluorohexyl)ethyl acrylate) was prepared as the component (C).

FUJITAC TD-60 (60 µm thick, FUJIFILM Corporation) was prepared as a support.

An intaglio plate made of Ni (KYODO INTERNATIONAL,INC.) in which conical recess portions having a pitch of 250 nm and a depth of 350 nm were patterned was prepared as a metal mold. The metal mold was immersed in Optool DSX (Daikin Industries, Ltd.) diluted 200 times with S-135 (Fluorotech Co., Ltd.) for 3 minutes. Next, the metal mold was raised and then annealed at 100°C for 1 hour. Next, a surface of the metal mold was then rinsed at S-135 to remove unreacted Optool DSX.

### • Production of Laminate

The polymerizable composition was obtained by uniformly dissolving components (A) to (E) with the formulations shown in Table 2 below in a light-shielding container. The resulting polymerizable composition was applied onto a surface of the support with a bar coater so that the thickness of the polymerizable composition was 7 µm. Next, the polymerizable composition layer was sandwiched between the mold and the support, and the support was pressed against the metal mold, and the polymerizable composition layer was cured by irradiating ultraviolet rays (integrated irradiation amount: 1,200 mJ/cm²) from the support side using a UV lamp "LIGHT HANMAR6J6P3" manufactured by HERAEUS. The metal mold was released from the polymer layer to obtain a film which is a laminate of the present disclosure.

### • Evaluation

Substrate adhesion, abrasion resistance, fingerprint wiping properties, and visual reflectance of the obtained film were measured as described below. The results are shown in Table 2.

### <Substrate adhesion>

First, a cutter knife was used to form 11 vertical and 11 horizontal cuts in a grid pattern at 1 mm intervals to form 100 square cells (1 mm square). Next, a polyester adhesive tape "No. 31B" manufactured by Nitto Denko Corporation was pressure-bonded to the square portions, and then the adhesive tape was peeled off at a speed of 100 mm/s in a direction of 90° with respect to the surfaces of the square portions. Thereafter, the peeling state of the polymer layer on the substrate was visually observed. The evaluation criteria were as follows:
O: No peeling was observed in all the squares.
×: One or more squares were peeled off.

### <Abrasion resistance>

A "Rubbing Tester" (manufactured by Imoto machinery Co., LTD.) was used as a tester, and a film was fixed in a horizontal state on a stage. A surface of the film was rubbed using a Toraysee standard "Color Cloth (Navy)" (Toray Industries, Inc.) as a friction block with a load of 1 kg/cm², a stroke width of 30 mm, a speed of 80 rpm, and a rubbing frequency of 30,000 reciprocations. Thereafter, the rubbing state of the film surface was visually observed. The evaluation criteria were as follows:
O: There was no change compared with before rubbing.
Δ: Slight whitening was observed.
×: Apparent whitening was observed.

### <Fingerprint wiping property>

First, a black PET plate was attached to a film via an optical adhesive layer on a surface of the support opposite to the polymer layer. After fingerprints were adhered to the polymer layer of the film (side opposite to the side to which the black PET plate was attached), the film was rubbed back and forth 10 times with "BEMCOT M-3II" (Asahi Kasei Co., Ltd) to visually observe whether the fingerprint was wiped off. The evaluation criteria were as follows:
O: Fingerprints were completely wiped off, and no wiping residue was observed.
Δ: Fingerprints were not very noticeable, but when a fluorescent lamp was reflected, wiping residue was slightly observed.
×: Fingerprints were not wiped off at all.

### <Visual reflectance>

First, a black PET plate was attached to a film via an optical adhesive layer on a surface of the support opposite to the polymer layer. The surface of the polymer layer of the film (surface on the side opposite to the side to which the black PET plate was attached) was measured with a spectrophotometer "CM-26d" (Konica Minolta Co., Ltd.) for visual reflectance with a D65 light source. The lower the visual reflectance, the better the antireflection property. Further, the visual reflectance was also measured in the same manner for the evaluation sites of the abrasion resistance and the fingerprint wiping property. It is preferable that there is no change in the visual reflectance after abrasion and after wiping off fingerprints.

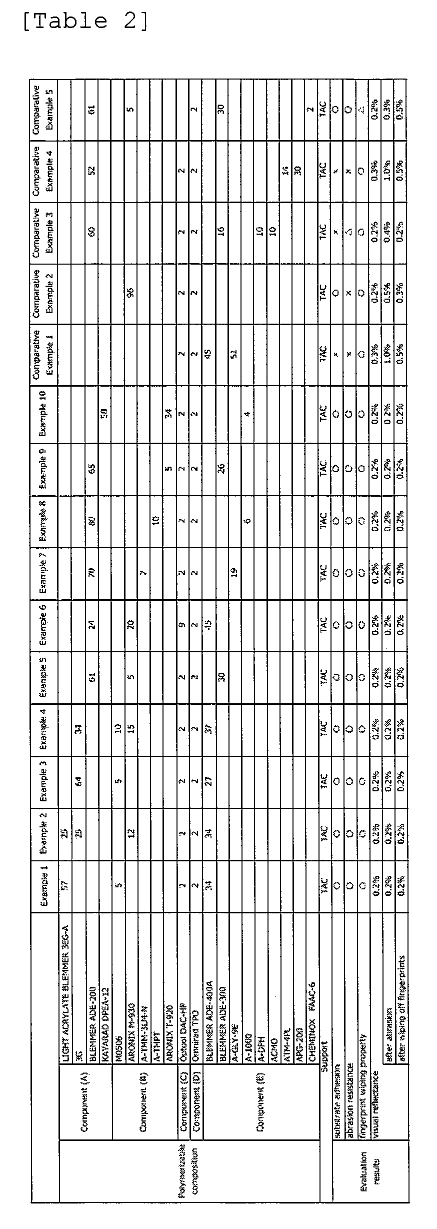

From the above results, it was confirmed that Example 1 to 10, in which a polymer layer was formed using the polymerizable composition of the present invention, had excellent substrate adhesion, abrasion resistance, fingerprint wiping property, and visual reflectance.

### Industrial Applicability

The laminate having a polymer layer obtained from the polymerizable composition of the present disclosure can be suitably used in an optical film (such as an antireflection film for a display), an optical element, a decorative film (interior decoration, exterior decoration), and the like.

### Reference Signs List

- 2: Support
- 3: Polymer layer
- 4: Antifouling layer
- 5: Polymerizable composition
- 6: Metal mold

## Claims

1. A polymerizable composition comprising:
(A) a compound having an alkylene oxide group and a (meth)acrylic group, with an alkylene oxide equivalent of less than 100 and a (meth)acrylic equivalent of less than 200, and having 2 or more identical polymerizable groups;
(B) a compound having a molecular weight of 140 or more and 350 or less, having no alkylene oxide group but having a (meth)acrylic group, with a (meth)acrylic equivalent of 137 or less, and having 2 or more carbon-carbon double bonds;
(C) a compound having a fluoro(poly)ether group and having 1 or more carbon-carbon double bonds; and
(D) a polymerization initiator, wherein
a content of (A) is 1.8% by mass to 98% by mass,
a content of (B) is 1.8% by mass to 98% by mass,
a content of (C) is 0.1% by mass to 10% by mass, and
a content of (D) is 0.1% by mass to 10% by mass, based on a total mass of the polymerizable composition.

2. The polymerizable composition according to claim 1, wherein the compound of component (A) is selected from the group consisting of triethylene glycol diacrylate, tetraethylene glycol diacrylate, pentaethylene glycol diacrylate, hexaethylene glycol diacrylate, triethylene glycol dimethacrylate, tetraethylene glycol dimethacrylate, pentaethylene glycol dimethacrylate, tetrapropylene glycol diacrylate, tetrapropylene glycol dimethacrylate, and ethylene oxide 12 mole modified dipentaerythritol hexaacrylate.

3. The polymerizable composition according to claim 1 or 2, wherein the compound of component (B) is selected from the group consisting of pentaerythritol diacrylate, pentaerythritol dimethacrylate, pentaerythritol triacrylate, pentaerythritol trimethacrylate, trimethylolpropane diacrylate, trimethylolpropane dimethacrylate, trimethylolpropane triacrylate, trimethylolpropane trimethacrylate, glycerol diacrylate, glycerol dimethacrylate, glycerol triacrylate, glycerol trimethacrylate, 2-hydroxy-3-acryloyl-oxypropyl methacrylate, N,N'-methylenebisacrylamide, N,N'-ethylenebisacrylamide, N,N'-(1,2-dihydroxyethylene)bisacrylamide, N,N',N"-triacryloyldiethylenetriamine, 1,3,5-triacryloylhexahydro-1,3,5-triazine, and 1,3,5-trimethacryloylhexahydro-1,3,5-triazine.

4. The polymerizable composition according to any one of claims 1 to 3, wherein the compound of component (C) is a compound represented by any one of the general formulas (A1), (A2), and (A3):
Rf - R¹ - R² - R³ - (R⁴)ₙ₁ - R⁵ - R⁶ ▪▪▪ (A1)
R⁶ - R⁵ - (R⁴)ₙ₁- R³ - R² - R¹ - R² - R³ - (R⁴)ₙ₁ - R⁵ - R⁶ ▪▪▪ (A2)
(Rf - R¹ - R²)ₙ₂ - R⁷ - (R⁸ - OC(O)CX¹=CH₂)ₙ₃ ▪▪▪ (A3)
wherein Rf represents an alkyl group having 1 to 16 carbon atoms optionally substituted with one or more fluorine atoms;
R¹ is a fluoro(poly)ether group;
R² is a group represented by the following formula:
-(Q)ₕ-(CFZ)ᵢ-(CH₂)ⱼ-
wherein Q represents an oxygen atom, phenylene, carbazolylene, -NR^{a}- where R^{a} represents a hydrogen atom or an organic group, or a divalent polar group; Z represents a hydrogen atom, a fluorine atom or a lower fluoroalkyl group; h, i, and j are each independently an integer of 0 or more and 50 or less; the sum of h, i, and j is at least 1; and the occurrence order of the respective repeating units enclosed in parentheses is not limited in the formula;
R³ represents a divalent organic group;
R⁴, each independently at each occurrence, represents R^{4a} or R^{4b}, provided that at least one R⁴ is R^{4a};
R^{4a}, each independently at each occurrence, represents a divalent organic group having a curable site;
R^{4b}, each independently at each occurrence, represents a divalent organic group not having a curable site;
n1 is an integer of 1 or more and 50 or less;
R⁵ represents -O-, -S-, -NH- or a single bond;
R⁶ represents Rf-R¹-R², wherein Rf, R¹, and R² the same meaning as described above, a monovalent organic group, or a hydrogen atom;
R⁷ represents an organic group having a valence of (n2 + n3) that optionally has a ring structure, a heteroatom and/or a functional group;
R⁸ represents a divalent organic group;
X¹ represents a hydrogen atom, a chlorine atom, a fluorine atom, or an alkyl group having 1 to 10 carbon atoms optionally substituted with fluorine;
n2 is an integer of 1 or more and 3 or less; and
n3 is an integer of 1 or more and 3 or less.

5. The polymerizable composition according to any one of claims 1 to 3, wherein the compound of component (C) is a compound represented by the general formula (1) or (2):
R^{F1}_{α}-X^{A}-R^{D}_{β} (1)
R^{D}_{γ}-X^{A}-R^{F2}-X^{A}-R^{D}_{γ} (2)
wherein
R^{F1} is each independently at each occurrence Rf¹-R^{F}-O_{q};
R^{F2} is -Rf²ₚ-R^{F}-O_{q}-;
Rf¹ is each independently at each occurrence a C₁₋₁₆ alkyl group optionally substituted with one or more fluorine atoms;
Rf² is a C₁₋₆ alkylene group optionally substituted with one or more fluorine atoms;
R^{F} is each independently at each occurrence a divalent fluoropolyether group;
p is 0 or 1;
q is each independently at each occurrence 0 or 1;
is each independently a single bond or a di- to decavalent organic group;
R^{D} is each independently at each occurrence a group containing a carbon-carbon double bond;
α is an integer of 1 to 9;
β is an integer of 1 to 9; and
γ is each independently an integer of 1 to 9.

6. A laminate comprising:
a support; and
a polymer layer having, on a surface thereof, an uneven structure in which a plurality of protruding portions are provided at a pitch equal to or less than a wavelength of visible light,
wherein the polymer layer is a cured product of the polymerizable composition according to claim 1.

7. The laminate according to claim 6, wherein the polymer layer has a thickness of 1 µm or more and 20 µm or less.

8. The laminate according to claim 6 or 7, wherein the pitch of the plurality of protruding portions on the surface of the polymer layer is 20 nm or more and 400 nm or less.

9. The laminate according to any one of claims 6 to 8, wherein a height of the plurality of protruding portions on the surface of the polymer layer is 50 nm or more and 500 nm or less.

10. The laminate according to any one of claims 6 to 9, wherein an aspect ratio of the plurality of protruding portions on the surface of the polymer layer is 0.13 or more and 25 or less.

11. An antireflection film comprising the laminate according to any one of claims 6 to 10.

12. A method for producing the laminate according to any one of claims 6 to 11, comprising:
(1) applying the polymerizable composition according to any one of claims 1 to 4 onto a surface of a support to form a polymerizable composition layer;
(2) pressing the polymerizable composition layer against a metal mold to form an uneven structure on the surface of the polymerizable composition layer;
(3) curing the polymerizable composition layer having the uneven structure on the surface to form a polymer layer; and
(4) releasing the metal mold from the polymer layer.
